(19) Europäisches Patentamt
European Patent Office
Office européen des brevets

(11) EP 3 794 064 B1

(12) **FASCICULE DE BREVET EUROPEEN**

(45) Date de publication et mention de la délivrance du brevet:
**23.03.2022 Bulletin 2022/12**

(21) Numéro de dépôt: **19790584.7**

(22) Date de dépôt: **17.05.2019**

(51) Classification Internationale des Brevets (IPC):
***C08J 9/00*** *(2006.01)* ***C08L 83/04*** *(2006.01)*
***C08J 9/28*** *(2006.01)* ***C08G 77/12*** *(2006.01)*
***C08G 77/20*** *(2006.01)*

(52) Classification Coopérative des Brevets (CPC):
(C-Sets disponibles)
**C08J 9/0061; C08J 9/283; C08L 83/04;**
C08G 77/12; C08G 77/20; C08G 77/46;
C08J 2201/026; C08J 2201/0504; C08J 2383/04;
C08J 2471/02; C08J 2483/04 (Cont.)

(86) Numéro de dépôt international:
**PCT/FR2019/051134**

(87) Numéro de publication internationale:
**WO 2019/220065 (21.11.2019 Gazette 2019/47)**

# (54) PROCEDE DE PRODUCTION DE MATERIAUX SILICONES POREUX

VERFAHREN ZUR HERSTELLUNG VON PORÖSEN SILIKONMATERIALIEN

METHOD FOR PRODUCING POROUS SILICONE MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2018 FR 1854150**

(43) Date de publication de la demande:
**24.03.2021 Bulletin 2021/12**

(73) Titulaires:
- **Elkem Silicones France SAS**
  **69003 Lyon (FR)**
- **Institut National des Sciences Appliquees de Lyon (Insa Lyon)**
  **69100 Villeurbanne (FR)**
- **UNIVERSITE CLAUDE BERNARD - LYON 1**
  **69100 Villeurbanne (FR)**
- **CENTRE NATIONAL DE LA RECHERCHE SCIENTIFIQUE -CNRS-**
  **75016 Paris (FR)**
- **Université Jean Monnet Saint Etienne**
  **42100 Saint Etienne (FR)**

(72) Inventeurs:
- **GANACHAUD, François**
  **69150 DECINES (FR)**
- **FLEURY, Etienne**
  **69510 SOUCIEU EN JARREST (FR)**
- **LARRIBE, Gabriel**
  **40280 SAINT PIERRE DU MONT (FR)**
- **MARIOT, David**
  **69008 LYON (FR)**
- **MARCHAL, Frédéric**
  **69210 L'Arbresle (FR)**

(74) Mandataire: **Plasseraud IP**
**66, rue de la Chaussée d'Antin**
**75440 Paris Cedex 09 (FR)**

(56) Documents cités:
**WO-A1-03/104312** **US-A1- 2005 113 461**
**US-A1- 2018 037 709**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08L 83/04, C08L 83/00, C08K 5/56**

## Description

### Domaine de l'invention

L'invention concerne un procédé pour produire un matériau silicone poreux. En particulier, l'invention concerne un procédé pour produire un matériau silicone poreux mettant en oeuvre une émulsion directe de silicone dans l'eau.
L'invention concerne également un matériau silicone poreux ainsi qu'une émulsion directe de silicone dans l'eau.

### Arrière-plan technologique

Les matériaux silicones poreux sont utilisés dans de nombreux domaines techniques, notamment dans le domaine de l'isolation. En effet, ces matériaux possèdent de bonnes propriétés mécaniques et une bonne stabilité thermique, et peuvent être utilisés comme isolant thermique, mécanique ou phonique.
Il existe différentes techniques pour produire des matériaux silicones poreux. Parmi ces techniques, on peut citer les procédés mettant en oeuvre une émulsion comprenant une phase silicone et une phase aqueuse.
La demande de brevet EP1724308 décrit une émulsion pour produire une mousse silicone élastomère. Cette émulsion comprend (A) une base silicone, capable de durcir par addition, contenant un diorganopolysiloxane comportant au moins deux groupes alcényle par molécules, un organopolysiloxane comportant au moins deux liaisons Si-H et un catalyseur au platine, (B) une solution aqueuse comprenant un polymère hydrosoluble, et (C) un agent émulsifiant.
La demande WO03/104312 décrit un procédé de production de matériaux silicone poreux comprenant les étapes suivantes :

- (1) on introduit dans un récipient, une émulsion de phase silicone dans l'eau, comprenant
  - (A) au moins un polyorganosiloxane (POS) réticulable par polyaddition, par polycondensation, par voie cationique ou par voie radicalaire ;
  - (B) éventuellement au moins un composé organosilicique réticulant ;
  - (C) éventuellement au moins un catalyseur ou un initiateur de la réaction de réticulation ;
  - (D) un tensioactif anionique, cationique ou non ionique ;
  - (E) de l'eau ;
- (1') éventuellement, on induit une pré-réticulation de la phase silicone ;
- (2) on déstabilise l'émulsion à l'aide d'un facteur déclenchant qui inhibe l'action du tensioactif (D), initiant la coalescence des gouttes de phase silicone, et conduisant à une rétraction homothétique du gel ;
- (3) on provoque la réticulation de la phase silicone, c'est-à-dire des constituants (A) et (B), figeant ainsi l'évolution de la coalescence et la rétraction du gel ; dans le cas où l'étape (1 ') est conduite, on poursuit la réticulation de la phase silicone ;
- (4) on sèche le matériau obtenu pour obtenir le matériau silicone poreux.

Le document US 2005/0113461 décrit une émulsion eau dans huile pour former un élastomère silicone poreux. L'émulsion comprend un silicone liquide qui forme un élastomère silicone par réticulation, une huile silicone qui a une fonction d'activation de surface et de l'eau.
La demande US2018/0037709 divulgue une composition silicone apte à être formée en éponge comportant: (A) un polyorganosiloxane ayant au moins deux groupes alcényle liés au silicium par molécule, (B) un polyorganosiloxane ayant au moins deux atomes d'hydrogène liés au silicium par molécule, (C) de l'eau, (D) des nanofibres de cellulose, (E) un émulsifiant, et (F) un catalyseur de réaction d'hydrosilylation.
Le plus souvent, les émulsions utilisées pour produire un matériau silicone poreux sont des émulsions inverse, c'est-à-dire des émulsions d'eau (ou d'un autre agent porogène) dans une phase silicone. La formation du matériau silicone poreux se fait par réticulation de la phase silicone, puis évaporation de l'agent porogène. Les émulsions inverses sont intéressantes car elles permettent de produire facilement des matériaux silicones poreux. Cependant l'utilisation d'émulsion inverse pose plusieurs problèmes, un des problèmes majeurs étant la stabilité des émulsions. Les émulsions inverses étant peu stables, elles ne peuvent pas être conservées longtemps, il faut donc les utiliser rapidement après production. Cela est problématique lorsque le site de production de l'émulsion est distant du site où est utilisée l'émulsion. Par ailleurs, la réactivité des émulsions inverses induit des phénomènes de réticulation prématurés qui sont préjudiciables. Les émulsions inverses sont également très visqueuses, ce qui peut poser problème si l'on souhaite enduire cette émulsion sur un support. Enfin, il n'est pas toujours aisé de contrôler la porosité ou la densité du matériau silicone poreux obtenu. Ces paramètres sont importants car ils influent sur les propriétés du matériau.
Dans ce contexte, un objectif de la présente invention est de fournir un procédé pour produire un matériau

silicone poreux remédiant à au moins un de ces désavantages.

Un autre objectif de la présente invention est de fournir un procédé pour produire un matériau silicone poreux qui soit simple à mettre en œuvre.

Un autre objectif de la présente invention est de fournir un procédé pour produire un matériau silicone poreux à partir d'une émulsion directe de silicone dans l'eau.

Un autre objectif de la présente invention est de fournir un procédé pour produire un matériau silicone poreux qui permette de contrôler la porosité et/ou la densité du matériau obtenu.

Un autre objectif de la présente invention est de fournir un procédé pour produire un matériau silicone poreux qui soit de bonne facture.

Un autre objectif de la présente invention est de fournir une émulsion qui soit stable pour produire un matériau silicone poreux.

Un autre objectif de la présente invention est de fournir une émulsion directe pour produire un matériau silicone poreux.

## Brève description de l'invention

Ces objectifs, parmi d'autres, ont été atteints grâce à un procédé pour produire un matériau silicone poreux comprenant les étapes suivantes :

1) mise en œuvre d'une émulsion directe **E** de silicone dans l'eau comprenant :

   A) une base silicone **A** réticulable par polyaddition ou polycondensation;
   B) au moins un tensioactif siliconé non-ionique **B** ayant un point de trouble compris entre 10 et 50°C, de préférence entre 15 et 45°C, ledit tensioactif siliconé non-ionique B étant un copolymère organopolysiloxane-polyoxyalkylène;
   C) éventuellement, au moins un catalyseur **C** ; et
   D) de l'eau ;

2) chauffage de l'émulsion **E** à une température supérieure ou égale à 60°C pour obtenir un matériau silicone poreux; et
3) éventuellement, séchage du matériau silicone poreux, de préférence par chauffage.

L'utilisation d'un tensioactif siliconé non-ionique **B** ayant un point de trouble compris entre 10 et 50°C permet la mise en oeuvre d'une émulsion directe pour produire un matériau silicone poreux. Les émulsions directes étant plus stables que les émulsions inverses, les problèmes de stockage et de réticulation prématurée sont évités. De plus, les émulsions directes sont faciles à manipuler et leur viscosité peut être plus facilement contrôlée.

Par ailleurs, le procédé est simple à mettre en œuvre. Tant que l'émulsion **E** n'est pas chauffée, la base silicone ne réticule pas. L'étape 2) de chauffage permet la déstabilisation, voire l'inversion, de l'émulsion. En effet, l'hydrophilie du tensioactif siliconé non-ionique **B** diminue avec la température, le tensioactif **B** gagne alors en affinité pour la phase silicone et ne joue plus son rôle de tensioactif. La base silicone **A** réticule alors pour former le matériau silicone poreux en piégeant l'eau dans les pores du matériau. Il est ensuite possible de sécher le matériau obtenu, afin d'éliminer l'eau.

Les matériaux silicones poreux obtenus par ce procédé possèdent de bonnes propriétés mécaniques.

L'invention concerne également une émulsion directe **E** de silicone dans l'eau comprenant :

A) une base silicone **A** réticulable par polyaddition ou polycondensation;
B) au moins un tensioactif siliconé non-ionique **B** ayant un point de trouble compris entre 10 et 50°C, de préférence entre 15 et 45°C, ledit tensioactif siliconé non-ionique B étant un copolymère organopolysiloxane-polyoxyalkylène;
C) éventuellement, au moins un catalyseur **C** ; et
D) de l'eau.

L'invention vise en outre un matériau silicone poreux obtenu par chauffage de cette émulsion **E** à une température supérieure ou égale à 60°C.

L'invention est par ailleurs relative à un matériau silicone poreux comprenant au moins un tensioactif siliconé non-ionique **B** ayant un point de trouble compris entre 10 et 50°C, de préférence entre 15 et 45°C, ledit tensioactif siliconé non-ionique B étant un copolymère organopolysiloxane-polyoxyalkylène.

Enfin, l'invention a pour objet un support enduit d'un matériau silicone poreux.

**Description détaillée de l'invention**

Définitions

Par « mise en oeuvre d'une émulsion directe **E** de silicone dans l'eau », on entend l'emploi d'une émulsion directe **E** de silicone dans l'eau. Cette émulsion **E** peut être préparée selon les méthodes connues de l'homme du métier, par exemple selon les méthodes décrites dans le document WO94/09058. Avantageusement, l'émulsion **E** est préparée en mélangeant les différents composants sous agitation, par exemple avec un homogénéiseur. Il est possible de préparer l'émulsion **E** de la façon suivante :

1. mélange de la base silicone **A** réticulable par polyaddition avec le tensioactif **B,**
2. ajout de l'eau **D,** et
3. ajout du catalyseur **C.**

Le catalyseur **C** peut être préalablement émulsifié dans de l'eau.

Par « matériau silicone poreux », on entend un matériau à base de silicone contenant des cavités (ou pores) remplies d'un ou plusieurs gaz. Les matériaux silicones poreux comprennent les mousses silicones ainsi que les mousses silicones élastomères. Le matériau silicone poreux a une densité plus faible que le matériau silicone non-poreux correspondant.

Par « émulsion », on entend un mélange d'au moins deux liquides non-miscibles dans lequel au moins un des liquides est présent sous forme de gouttelettes dispersées dans au moins un autre liquide. Dans le cas d'une émulsion directe de silicone dans l'eau, c'est la phase silicone qui est dispersée sous forme de gouttelettes dans l'eau. Les émulsions directes sont également connues sous le nom d'émulsion huile dans eau. Dans le cas d'une émulsion inverse de silicone, c'est l'eau qui est dispersée sous forme de gouttelettes dans la phase silicone. Les émulsions inverses sont également connues sous le nom d'émulsion eau dans huile.

Par « tensioactif siliconé non-ionique », on entend un tensioactif non-ionique comprenant au moins une chaine polysiloxane.

Par « tensioactif non-ionique », on entend un tensioactif ne comprenant aucune charge nette.

Par « polysiloxane », on entend un composé possédant plusieurs motifs ≡Si-O-Si≡.

Par "alcényle", on entend une chaîne hydrocarbonée insaturée, linéaire ou ramifiée, substituée ou non, présentant au moins une double liaison oléfinique, et plus préférablement une seule double liaison. De préférence, le groupe "alcényle" présente de 2 à 8 atomes de carbone, mieux encore de 2 à 6. Cette chaîne hydrocarbonée comprend éventuellement au moins un hétéroatome tel que O, N, S. Des exemples préférés de groupes "alcényle" sont les groupes vinyle, allyle et homoallyle, le vinyle étant particulièrement préféré.

Par « alcynyle », on entend une chaîne hydrocarbonée insaturée, linéaire ou ramifiée, substituée ou non, présentant au moins une triple liaison, et plus préférablement une seule triple liaison. De préférence, le groupe "alcynyle" présente de 2 à 8 atomes de carbone, mieux encore de 2 à 6. Cette chaîne hydrocarbonée comprend éventuellement au moins un hétéroatome tel que O, N, S.

Par « alkyle », on entend une chaîne hydrocarbonée, linéaire ou ramifiée, comprenant de 1 à 40 atomes de carbone, de préférence de 1 à 20 atomes de carbone, plus préférentiellement de 1 à 10 atomes de carbone. Un groupe alkyle peut être choisi dans le groupe constitué par méthyle, éthyle, isopropyle, n-propyle, tert-butyle, isobutyle, n-butyle, n-pentyle, isoamyle et 1,1-diméthylpropyle.

Par « cycloalkyle », on entend selon l'invention un groupe hydrocarboné saturé monocyclique ou polycyclique, de préférence monocyclique ou bicyclique, contenant de 3 à 20 atomes de carbone, de préférence de 5 à 8 atomes de carbone. Lorsque le groupe cycloalkyle est polycyclique, les multiples noyaux cycliques peuvent être rattachés les uns aux autres par une liaison covalente et/ou par un atome spiranique et/ou être condensés les uns aux autres. Un groupe cycloalkyle peut être choisi dans le groupe constitué par le cyclopropyle, le cyclobutyle, le cyclopentyle, le cyclohexyle, le cycloheptyle, le cyclooctyle, l'adamantane et le norborane.

Par « aryle », on entend selon l'invention un groupe hydrocarboné aromatique contenant de 5 à 18 atomes de carbone, monocyclique ou polycyclique. Un groupe aryle peut être choisi dans le groupe constitué par phényle, naphtyle, anthracényle et phénanthryle.

Par « atome d'halogène », on entend selon l'invention un atome choisi dans le groupe constitué par le fluor, le chlore, le brome et l'iode.

Par « alcoxy », on entend selon l'invention un groupe alkyle tel que défini ci-avant lié à un atome d'oxygène. Un groupe alcoxy peut être choisi dans le groupe constitué par méthoxy, éthoxy, propoxy et butoxy.

Procédé pour produire un matériau silicone poreux

L'invention concerne en premier lieu un procédé pour produire un matériau silicone poreux comprenant les étapes suivantes :

1) mise en œuvre d'une émulsion directe **E** de silicone dans l'eau comprenant :

A) une base silicone **A** réticulable par polyaddition ou polycondensation;
B) au moins un tensioactif siliconé non-ionique **B** ayant un point de trouble compris entre 10 et 50°C, de préférence entre 15 et 45°C, ledit tensioactif siliconé non-ionique B étant un copolymère organopolysiloxane-polyoxyalkylène;
C) éventuellement, au moins un catalyseur **C** ; et
D) de l'eau ;

2) chauffage de l'émulsion **E** à une température supérieure ou égale à 60°C pour obtenir un matériau silicone poreux; et
3) éventuellement, séchage du matériau silicone poreux, de préférence par chauffage.

*Emulsion directe E de silicone dans l'eau*

Le procédé selon l'invention met en oeuvre une émulsion directe **E** de silicone dans l'eau comprenant :

A) une base silicone **A** réticulable par polyaddition ou polycondensation ;
B) au moins un tensioactif siliconé non-ionique **B** ayant un point de trouble compris entre 10 et 50°C, de préférence entre 15 et 45°C, ledit tensioactif siliconé non-ionique B étant un copolymère organopolysiloxane-polyoxyalkylène;
C) éventuellement, au moins un catalyseur **C ;** et
D) de l'eau.

Base silicone **A**

Le procédé selon l'invention met en oeuvre une émulsion directe **E** de silicone dans l'eau comprenant une base silicone **A** réticulable par polyaddition ou polycondensation.

Selon un premier mode de réalisation la base silicone **A** est réticulable par polyaddition. Les bases silicones réticulables par polyaddition sont bien connues de l'homme du métier, il s'agit de bases silicones réticulables par réaction d'hydrosilylation. Dans ce premier mode de réalisation, la base silicone **A** comprend

o au moins un organopolysiloxane **A1** comprenant, par molécule, au moins 2 groupes alcényle ou alcynyle, linéaire ou ramifié, ayant de 2 à 6 atomes de carbone, et
o au moins un organohydrogénopolysiloxane **A2** comprenant, par molécule, au moins 2 fonctions hydrogénosilyle Si-H.

Avantageusement, l'organopolysiloxane **A1** est choisi parmi les composés organopolysiloxanes comportant des motifs de formule (I) :

$$Z_aU_bSiO_{(4-(a+b))/2} \qquad (I)$$

dans laquelle :

- les radicaux Z, identiques ou différents, représentent un radical alcényle ou alcynyle, linéaire ou ramifié, ayant de 2 à 6 atomes de carbone ;
- les radicaux U, identiques ou différents, représentent un radical hydrocarboné ayant de 1 à 12 atomes de carbone,
- a = 1 ou 2, b = 0, 1 ou 2 et a+b =1, 2 ou 3 ;

et comportant éventuellement d'autres motifs de formule (II) :

$$U_cSiO_{(4-c)/2} \qquad (II)$$

dans laquelle U a la même signification que ci-dessus, et c = 0,1, 2, ou 3.

Préférentiellement les radicaux Z, identiques ou différents, représentent un radical alcényle, linéaire ou ramifié, ayant de 2 à 6 atomes de carbone, le radical vinyle étant particulièrement préféré.

Il est entendu dans la formule (I) et dans la formule (II) ci-dessus que, si plusieurs groupes U sont présents, ils peuvent être identiques ou différents les uns des autres. Dans la formule (I), le symbole a peut préférentiellement être égal à 1.

Dans la formule (I) et dans la formule (II), U peut représenter un radical monovalent choisi dans le groupe constitué par les groupes alkyles ayant 1 à 8 atomes de carbone, éventuellement substitué par au moins un atome d'halogène tel que le chlore ou le fluor, les groupes cycloalkyles ayant de 3 à 8 atomes de carbone et les groupes aryles ayant de 6 à 12 atomes de carbone. U peut avantageusement être choisi dans le groupe constitué par le méthyle, l'éthyle, le propyle, le 3,3,3-trifluoropropyle, le xylyle, le tolyle et le phényle.

Lesdits organopolysiloxanes **A1** peuvent être des huiles de viscosité dynamique de l'ordre de 10 à 100.000 mPa.s à 25°C, généralement de l'ordre de 10 à 70.000 mPa.s à 25°C, ou des gommes de viscosité dynamique de l'ordre de 1.000.000 mPa.s ou plus à 25°C. Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Ces organopolysiloxanes **A1** peuvent présenter une structure linéaire, ramifiée ou cyclique. Leur degré de polymérisation est, de préférence, compris entre 2 et 5000.

Lorsqu'il s'agit de polymères linéaires, ceux-ci sont essentiellement constitués de motifs siloxyles « D » choisis parmi le groupe constitué par les motifs siloxyles $Z_2SiO_{2/2}$, $ZUSiO_{2/2}$ et $U_2SiO_{2/2}$, et de motifs siloxyles « M » choisis parmi le groupe constitué par les motifs siloxyles $ZU_2SiO_{1/2}$, $Z_2USiO_{1/2}$ et $Z_3SiO_{1/2}$. Les symboles Z et U sont tels que décrits ci-dessus.

A titre d'exemples de motifs « M » terminaux, on peut citer les groupes triméthylsiloxy, diméthylphénylsiloxy, diméthylvinylsiloxy ou diméthylhexènylsiloxy.

A titre d'exemples de motifs « D », on peut citer les groupes diméthylsiloxy, méthylphénylsiloxy, méthylvinylsiloxy, méthylbutènylsiloxy, méthylhexènylsiloxy, méthyldécènylsiloxy ou méthyldécadiènylsiloxy.

Des exemples d'organopolysiloxanes linéaires pouvant être des composés insaturés **A1** selon l'invention sont :

- un poly(diméthylsiloxane) à extrémités diméthylvinylsilyles ;
- un poly(diméthylsiloxane-co-méthylphénylsiloxane) à extrémités diméthylvinylsilyles ;
- un poly(diméthylsiloxane-co-méthylvinylsiloxane) à extrémités diméthylvinylsilyles ; et
- un poly(diméthylsiloxane-co-méthylvinylsiloxane) à extrémités triméthylsilyles ; et
- un poly(méthylvinylsiloxane) cycliques.

Les organopolysiloxanes cycliques pouvant être également des composés insaturés **A1** selon l'invention sont par exemple, ceux constitués de motifs siloxyles «D» de formules suivantes : $Z_2SiO_{2/2}$, $U_2SiO_{2/2}$ ou $ZUSiO_{2/2}$, qui peuvent être du type dialkylsiloxy, alkylarylsiloxy, alkylvinylsiloxy, alkylsiloxy. Lesdits organopolysiloxanes cycliques présentent une viscosité de l'ordre de 10 à 5000 mPa.s à 25°C.

De préférence, le composé organopolysiloxane **A1** a une teneur massique en motif Sivinyle comprise entre 0,001 et 30%, de préférence entre 0,01 et 10%.

Comme autres exemples de composés insaturés **A1** on peut citer les résines silicones comprenant au moins un radical vinyle. Par exemple elles peuvent être choisies parmi le groupe constitué par les résines silicones suivantes :

- $MD^{Vi}Q$ où les groupes vinyles sont inclus dans les motifs D,
- $MD^{Vi}TQ$ où les groupes vinyles sont inclus dans les motifs D,
- $MM^{Vi}Q$ où les groupes vinyles sont inclus dans une partie des motifs M,
- $MM^{Vi}TQ$ où les groupes vinyles sont inclus dans une partie des motifs M,
- $MM^{Vi}DD^{Vi}Q$ où les groupes vinyles sont inclus dans une partie des motifs M et D,
- et leurs mélanges,

  avec :
- $M^{Vi}$ = motif siloxyle de formule $(R)_2(vinyle)SiO_{1/2}$
- $D^{Vi}$ = motif siloxyle de formule $(R)(vinyle)SiO_{2/2}$
- T = motif siloxyle de formule $(R)SiO_{3/2}$
- Q = motif siloxyle de formule $SiO_{4/2}$
- M = motif siloxyle de formule $(R)_3SiO_{1/2}$
- D = motif siloxyle de formule $(R)_2SiO_{2/2}$

et les groupements R, identiques ou différents, sont des groupes hydrocarbonés monovalents choisis parmi

les groupes alkyles ayant de 1 à 8 atomes de carbone inclus tels que les groupes méthyle, éthyle, propyle et 3,3,3-trifluoropropyle et les groupes aryle tels que xylyle, tolyle et phényle. De préférence, les groupements R sont des méthyles.

Bien entendu, selon les variantes, l'organopolysiloxane **A1** peut être un mélange de plusieurs huiles ou résines répondant à la définition de l'organopolysiloxane **A1**.

L'organohydrogénopolysiloxane **A2** peut avantageusement être un organopolysiloxane comprenant au moins un motif de formule (III) :

$$H_dU_eSiO_{(4-(d+e))/2} \qquad (III)$$

dans laquelle :

- les radicaux U, identiques ou différents, représentent un radical hydrocarboné ayant de 1 à 12 atomes de carbone,
- d =1 ou 2, e =0, 1 ou 2 et d+e =1, 2 ou 3 ;

et éventuellement d'autres motifs de formule (IV) :

$$U_fSiO_{(4-f)/2} \qquad (IV)$$

dans laquelle U a la même signification que ci-dessus, et f = 0,1, 2, ou 3.

Il est entendu dans la formule (III) et dans la formule (IV) ci-dessus que, si plusieurs groupes U sont présents, ils peuvent être identiques ou différents les uns des autres. Dans la formule (III), le symbole d peut préférentiellement être égal à 1. De plus, dans la formule (III) et dans la formule (IV), U peut représenter un radical monovalent choisi dans le groupe constitué par les groupes alkyles ayant 1 à 8 atomes de carbone, éventuellement substitué par au moins un atome d'halogène tel que le chlore ou le fluor, les groupes cycloalkyles ayant de 3 à 8 atomes de carbone et les groupes aryles ayant de 6 à 12 atomes de carbone. U peut avantageusement être choisi dans le groupe constitué par le méthyle, l'éthyle, le propyle, le 3,3,3-trifluoropropyle, le xylyle, le tolyle et le phényle.

Ces organopolysiloxanes **A2** peuvent présenter une structure linéaire, ramifiée, ou cyclique. Le degré de polymérisation est de préférence supérieur ou égal à 2. Généralement, il est inférieur à 5000.

Lorsqu'il s'agit de polymères linéaires, ceux-ci sont essentiellement constitués :

- de motifs siloxyles « D » choisis parmi les motifs de formules suivantes $U_2SiO_{2/2}$ ou $UHSiO_{2/2}$, et
- de motifs siloxyles « M » choisis parmi les motifs de formules suivantes $U_3SiO_{1/2}$ ou $U_2HSiO_{1/2}$.

Les organopolysiloxanes linéaires peuvent être des huiles de viscosité dynamique de l'ordre de 1 à 100 000 mPa.s à 25°C et plus généralement de l'ordre de 10 à 5000 mPa.s à 25°C.

Des exemples d'organopolysiloxanes pouvant être des composés **A2** selon l'invention comprenant au moins un atome d'hydrogène lié à un atome de silicium sont :

- un poly(diméthylsiloxane) à extrémités hydrogénodiméthylsilyles;
- un poly(diméthylsiloxane-co-méthylhydrogénosiloxane) à extrémités triméthylsilyles;
- un poly(diméthylsiloxane-co-méthylhydrogénosiloxane) à extrémités hydrogénodiméthylsilyles ;
- un poly(méthylhydrogénosiloxane) à extrémités triméthylsilyles ; et
- un poly(méthylhydrogénosiloxane) cycliques.

Lorsqu'il s'agit d'organopolysiloxanes cycliques, ceux-ci sont constitués de motifs siloxyles « D » de formules suivantes $U_2SiO_{2/2}$ et $UHSiO_{2/2}$, qui peuvent être du type dialkylsiloxy ou alkylarylsiloxy ou de motifs $UHSiO_{2/2}$ uniquement. Ils présentent alors une viscosité de l'ordre de 1 à 5000 mPa.s.

Le composé **A2** est un composé organohydrogénopolysiloxane comprenant par molécule au moins deux et de préférence au moins trois fonctions hydrogénosilyles (Si-H).

Conviennent particulièrement à l'invention à titre de composés organohydrogénopolysiloxanes **A2** les composés suivants :

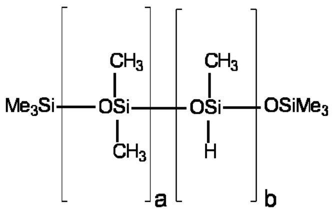

S1

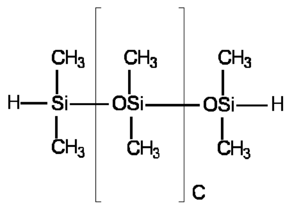

S2

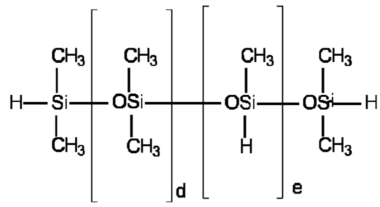

S3

avec a, b, c, d et e définis ci-dessous :

- dans le polymère de formule S1 :
  - $0 \leq a \leq 150$, de préférence $0 \leq a \leq 100$, et plus particulièrement $0 \leq a \leq 20$, et
  - $1 \leq b \leq 90$ de préférence $10 \leq b \leq 80$ et plus particulièrement $30 \leq b \leq 70$,
- dans le polymère de formule S2 : $0 \leq c \leq 15$
- dans le polymère de formule S3 : $5 \leq d \leq 200$, de préférence $20 \leq d \leq 100$, et $2 \leq e \leq 90$, de préférence $10 \leq e \leq 70$.

En particulier, un composé organohydrogénopolysiloxane **A2** convenant à l'invention est le composé de formule S1, où a=0.

De préférence, le composé organohydrogénopolysiloxane **A2** a une teneur massique en fonctions hydrogénosilyle Si-H comprise entre 0,2 et 91%. Le composé organohydrogénopolysiloxane **A2** peut avoir une teneur massique en fonctions hydrogénosilyle Si-H supérieure ou égale à 15%, de préférence supérieur ou égale à 30%. Par exemple, le teneur massique en fonctions hydrogénosilyle Si-H est comprise entre 15 et 90%, ou entre 30 et 85%.

Selon un mode de réalisation, l'organohydrogénopolysiloxane **A2** est une résine prrésentant une structure ramifiée. L'organohydrogénopolysiloxane **A2** peut être choisi parmi le groupe constitué par les résines silicones suivantes :

- M'Q où les atomes d'hydrogène liés à des atomes de silicium sont portés par les groupes M,
- MM'Q où les atomes d'hydrogène liés à des atomes de silicium sont portés par une partie des motifs M,
- MD'Q où les atomes d'hydrogène liés à des atomes de silicium sont portés par les groupes D,
- MDD'Q où les atomes d'hydrogène liés à des atomes de silicium sont portés par une partie des groupes D,
- MM'TQ où les atomes d'hydrogène sont inclus dans une partie des motifs M,
- MM'DD'Q où les atomes d'hydrogène sont inclus dans une partie des motifs M et D,
- et leurs mélanges,

avec :

- M, D, T et Q tels que définis précédemment
- M'= motif siloxyle de formule $R_2HSiO_{1/2}$
- D'= motif siloxyle de formule $RHSiO_{2/2}$,

et les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle. De préférence, les groupements R sont des méthyles.

De préférence la résine organohydrogénopolysiloxane **A2** est une résine M'Q ou MD'Q telles que décrites ci-dessus. Encore plus préférentiellement, la résine organohydrogénopolysiloxane **A2** est une résine M'Q.

Bien entendu, selon les variantes, l'organohydrogénopolysiloxane **A2** peut être un mélange de plusieurs huiles ou résines répondant à la définition de l'organohydrogénopolysiloxane **A2.**

Avantageusement, le ratio molaire des fonctions hydrogénosilyles Si-H des composés **A2** sur les fonctions alcènes et alcynes des composés **A1** est compris entre 0,02 et 5, de préférence entre 0,1 et 4, et de façon plus préférée entre 0,5 et 3.

Selon un deuxième mode de réalisation, la base silicone **A** est réticulable par polycondensation. Les bases silicones réticulable par polycondensation sont bien connues de l'homme du métier. Dans ce deuxième mode de réalisation, la base silicone **A** comprend

- au moins un organopolysiloxane **A3** comprenant au moins deux groupements OH ou au moins deux groupements hydrolysables, et
- éventuellement, au moins un agent réticulant **A4**.

De préférence, l'organopolysiloxane **A3** est porteur d'au moins deux groupements choisis dans le groupe constitué par les groupements hydroxy, alcoxy, alcoxy-alkylène-oxy, amino, amido, acylamino, aminoxy, iminoxy, cétiminoxy, acyloxy et énoxy. Avantageusement, l'organopolysiloxane **A3** comprend :

(i) au moins deux motifs siloxyles de formule (V) suivante :

$$R_g^1\, Y_h\, SiO_{\frac{4-(g+h)}{2}} \qquad \text{(V)}$$

dans laquelle :

- les radicaux $R^1$, identiques ou différents, représentent des radicaux hydrocarbonés monovalents en $C_1$ à $C_{30}$,
- les radicaux Y, identiques ou différents, représentent chacun un groupement hydrolysable et condensable ou un groupement hydroxy, et de préférence sont choisis dans le groupe constitué par les groupements hydroxy, alcoxy, alcoxy-alkylène-oxy, amino, amido, acylamino, aminoxy, iminoxy, cétiminoxy, acyloxy, et énoxy,
- g est égal à 0, 1 ou 2, h est égal à 1, 2 ou 3, la somme g + h est égale à 1, 2 ou 3, et

(ii) éventuellement un ou plusieurs motif(s) siloxyle(s) de formule (VI) suivante :

$$R_i^2\, SiO_{\frac{4-i}{2}} \qquad \text{(VI)}$$

dans laquelle :

- les radicaux $R^2$, identiques ou différents, représentent des radicaux hydrocarbonés monovalent en $C_1$ à $C_{30}$ éventuellement substitués par un ou plusieurs atomes d'halogène ou par des groupements amino, éther, ester, époxy, mercapto ou cyano, et
- le symbole i est égal à 0, 1, 2 ou 3.

Comme exemples de groupements hydrolysables et condensables Y de type alcoxy, on peut citer les groupes ayant de 1 à 8 atomes de carbone comme les groupes méthoxy, éthoxy, n-propoxy, iso-propoxy, n-butoxy, iso-butoxy, sec-butoxy, tert-butoxy, 2-méthoxyéthoxy, hexyloxy ou octyloxy.

Comme exemples de groupements hydrolysables et condensables Y de type alcoxy-alkylène-oxy, on peut citer le groupement méthoxy-éthylène-oxy.

Comme exemples de groupements hydrolysables et condensables Y de type amino, on peut citer les groupements méthylamino, diméthylamino, éthylamino, diéthylamino, n-butylamino, sec-butylamino ou cyclohexylamino.

Comme exemples de groupements hydrolysables et condensables Y de type amido, on peut citer le groupement N-méthyl-acétamido.

Comme exemples de groupements hydrolysables et condensables Y de type acylamino, on peut citer le groupement benzoyl-amino.

Comme exemples de groupements hydrolysables et condensables Y de type aminoxy, on peut citer les groupements diméthylaminoxy, diéthylaminoxy, dioctylaminoxy ou diphénylaminoxy.

Comme exemples de groupements hydrolysables et condensables Y de type iminoxy et en particulier cétiminoxy, on peut citer les groupements dérivés des oximes suivantes : acétophénone-oxime, acétone-oxime, benzophénone-oxime, méthyl-éthyl-cétoxime, diisopropylcétoxyme ou méthylisobutyl-cétoxime.

Comme exemples de groupements hydrolysables et condensables Y de type acyloxy, on peut citer le groupement acétoxy.

Comme exemples de groupements hydrolysables et condensables Y de type énoxy, on peut citer le groupement 2-propénoxy.

La viscosité de l'organopolysiloxane **A3** est généralement comprise entre 50 mPa.s et 1 000 000 mPa.s à 25°C.

De préférence, l'organopolysiloxane **A3** a pour formule générale (VII) :

$$Y_jR^3_{3-j}\,Si - O - (SiR^3_2 - O)_p - SiR^3_{3-j}Y_j \qquad (VII)$$

dans laquelle :

- les radicaux Y, identiques ou différents, représentent chacun un groupement hydrolysable et condensable ou un groupement hydroxy, et de préférence sont choisis dans le groupe constitué par les groupements hydroxy, alcoxy, alcoxy-alkylène-oxy, amino, amido, acylamino, aminoxy, iminoxy, cétiminoxy, acyloxy et énoxy,
- les radicaux $R^3$, identiques ou différents, représentent des radicaux hydrocarbonés monovalent en $C_1$ à $C_{30}$ éventuellement substitués par un ou plusieurs atomes d'halogène ou par des groupements amino, éther, ester, époxy, mercapto ou cyano,
- le symbole j est égal à 1, 2 ou 3, de préférence égal à 2 ou 3, et lorsque Y est un groupe hydroxyl alors j = 1, et
- p est un entier supérieur ou égal à 1, de préférence p est un entier compris entre 1 et 2000.

Dans les formules (V), (VI) et (VII), les radiaux $R^1$, $R^2$ et $R^3$ sont de préférence :

- des radicaux alkyles ayant de 1 à 20 atomes de carbone, éventuellement substitués par un ou plusieurs groupes aryles ou cycloalkyles, par un ou plusieurs atomes d'halogène ou par des groupements amino, éther, ester, époxy, mercapto, cyano ou (poly)glycol. On peut citer par exemple les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle ;
- des radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle ;
- des radicaux aryles et halogénoaryles mononucléaires ayant de 6 à 13 atomes de carbone tels que les radicaux : phényle, tolyle, xylyle, chlorophényle, dichlorophényle, trichlorophényle ; ou
- des radicaux alcényles ayant de 2 à 8 atomes de carbone tels que les radicaux : vinyle, allyle et butène-2 yle.

Dans le cas particulier où l'organopolysiloxane **A3** est un organopolysiloxane de formule générale (VII) avec des symboles Y de type hydroxyle, alors le symbole j sera de préférence égal à 1. Dans ce cas, on préfère utiliser des poly(diméthylsiloxane) ayant des fonctions silanols en positions terminales (dites également positions « alpha-oméga »).

L'organopolysiloxane **A3** peut aussi être choisi parmi les résines organosiliciques porteuses d'au moins un groupe hydroxy ou alcoxy, groupements qui sont soit condensables ou hydrolysables, soit condensables, qui comportent au moins deux motifs siloxyles différents choisis parmi ceux de formule M, D, T et Q avec :

- le motif siloxyle M = $(R^0)_3SiO_{1/2}$,
- le motif siloxyle D = $(R^0)_2SiO_{2/2}$,
- le motif siloxyle T = $R^0SiO_{3/2}$, et
- le motif siloxyle Q = $SiO_{4/2}$ ;

formules dans lesquelles $R^0$ représente un groupement monovalent hydrocarboné ayant de 1 à 40 atomes de carbone, et de préférence de 1 à 20 atomes de carbones, ou un groupe - OR''' avec R'''= H ou un radical alkyle ayant de 1 à 40 atomes de carbone, et de préférence de 1 à 20 atomes de carbones ;
avec la condition que les résines comprennent au moins un motif T ou Q.

Ladite résine a de préférence une teneur pondérale en substituants hydroxy ou alcoxy comprise entre 0,1 et 10% en poids par rapport au poids de la résine, et de préférence une teneur pondérale en substituants hydroxy ou alcoxy comprise entre 0,2 et 5% en poids par rapport au poids de la résine.

Les résines organosiliciques possèdent en général environ de 0,001 à 1,5 groupe OH et/ou alkoxyle par atome de silicium. Ces résines organosiliciques sont généralement préparées par co-hydrolyse et co-condensation de chlorosilanes tels que ceux de formules $(R^{19})_3SiCl$, $(R^{19})_2Si(Cl)_2$, $R^{19}Si(Cl)_3$ ou $Si(Cl)_4$, les radicaux $R^{19}$ étant identiques ou différents et généralement choisis parmi les radicaux alkyles linéaires ou ramifiés en $C_1$ à $C_6$, phényle et trifluoro-3,3,3 propyle. On peut citer comme exemple de radicaux $R^{19}$ de type alkyle, notamment un méthyle, un éthyle, un isopropyle, un tertiobutyle et un n-hexyle.

Comme exemple de résine on peut citer les résines siliciques de type $T^{(OH)}$, $DT^{(OH)}$, $DQ^{(OH)}$, $DT^{(OH)}$, $MQ^{(OH)}$, $MDT^{(OH)}$, $MDQ^{(OH)}$ ou les mélanges de celles-ci.

Dans ce deuxième mode de réalisation, la base silicone peut contenir en outre un agent de réticulation **A4**. L'agent de réticulation est de préférence un composé organosilicié portant plus de deux groupes hydrolysables liés aux atomes de silicium par molécule. De tels agents de réticulation sont bien connus de l'homme du métier et sont disponibles

dans le commerce.

L'agent de réticulation **A4** est de préférence un composé à base de silicium dont chaque molécule comprend au moins trois groupements hydrolysables et condensables Y, ledit agent de réticulation **A4** ayant la formule (VIII) suivante :

$$R^4{}_{(4-k)}SiY_k \qquad (VIII)$$

dans laquelle :

- les radicaux $R^4$, identiques ou différents, représentent des radicaux hydrocarbonés monovalents en $C_1$ à $C_{30}$,
- les radicaux Y, identiques ou différents, sont choisis dans le groupe constitué par les groupements alcoxy, alcoxy-alkylène-oxy, amino, amido, acylamino, aminoxy, iminoxy, cétiminoxy, acyloxy ou énoxy, et de préférence Y est un groupement alcoxy, acyloxy, énoxy, cétiminoxy ou oxime, et
- le symbole k = 2, 3 ou 4, et de préférence k = 3 ou 4.

Des exemples de groupements Y sont les mêmes que ceux cités ci-dessus lorsque le symbole Y est un groupement hydrolysable et condensable, c'est-à-dire différent d'un groupement hydroxyle.

A titre d'autres exemples d'agent de réticulation **A4**, on peut citer les alcoxysilanes et les produits d'hydrolyse partielle de ce silane de formule générale (IX) suivante :

$$R^5{}_1Si(OR^6)_{(4-1)} \qquad (IX)$$

dans laquelle :

- les radicaux $R^5$, identiques ou différents, représentent des radicaux alkyles ayant de 1 à 8 atomes de carbone, tels que les radicaux méthyle, éthyle, propyle, butyle, pentyle, éthyl-2 hexyle, octyle et décyle, des radicaux oxyalkylènes en $C_3$-$C_6$,
- les radicaux $R^5$, identiques ou différents, représentent un groupe hydrocarboné aliphatique saturé ou insaturé, linéaire ou ramifié, un groupe carbocyclique, saturé ou insaturé et/ou aromatique, monocyclique ou polycyclique, et
- 1 est égal à 0, 1 ou 2.

Parmi les agents de réticulation **A4**, on préfère plus particulièrement les alcoxysilanes, les cétiminoxysilanes, les silicates d'alkyle et les polysilicates d'alkyle, dans lesquels les radicaux organiques sont des radicaux alkyles ayant de 1 à 4 atomes de carbone.

De préférence, on utilise les agents de réticulation **A4** suivants, seuls ou en mélange :

o le polysilicate d'éthyle et le polysilicate de n-propyle ;

◦ les alcoxysilanes tels que des dialcoxysilanes, par exemple des dialkyldialcoxysilanes, des trialcoxysilanes, par exemple des alkyltrialcoxysilanes, et des tétraalcoxysilanes, et de préférence le propyltriméthoxysilane, le méthyltriméthoxysilane, le méthyltriéthoxysilane, l'éthyltriméthoxysilane, l'éthyltriéthoxysilane, l'isobutyltriméthoxysilane, l'isobutyltriéthoxysilane, le propyltriéthoxysilane, le tétraméthoxysilane, le tétraéthoxysilane, le tétrapropoxysilane, le tétrabutoxysilane, le 1,2-bis(triméthoxysilyl)éthane, le 1,2-bis(triéthoxysilyl)éthane, le tétraisopropoxysilane, le phényltriéthoxysilane, le phényltriméthoxysilane, vinyltriéthoxysilane, le vinyltriméthoxysilane et ceux de formules suivantes : $CH_2$=$CHSi(OCH_2CH_2OCH_3)_3$ , $[CH_3][OCH(CH_3)CH_2OCH_3]Si[OCH_3]_2$, $Si(OC_2H_4OCH_3)_4$ et $CH_3Si(OC_2H_4OCH_3)_3$,

◦ les acyloxysilanes tels que les acétoxysilanes suivants : le tétraacétoxysilane, le méthyltriacétoxysilane, l'éthyltriacétoxysilane, le vinyltriacétoxysilane, le propyltriacétoxysilane, le butyltriacétoxysilane, le phényltriacétoxysilane, l'octyltriacétoxysilane, le diméthyldiacétoxysilane, le phénylméthyldiacétoxysilane, le vinylméthyldiacétoxysilane, le diphényldiacétoxysilane et le tétraacétoxysilane,

◦ les silanes comprenant des groupements alcoxy et acétoxy tels que : le méthyldiacétoxyméthoxysilane, le méthylacétoxydiméthoxysilane, le vinyldiacétoxyméthoxysilane, le vinylacétoxydiméthoxysilane, le méthyldiacétoxyéthoxysilane et le méthylacétoxydiéthoxysilane,

o méthyltris(méthyléthyl-cétoximo)silane, le 3-cyanopropyltriméthoxysilane, le 3-cyanopropyl-triéthoxysilane, 3-(glycidyloxy)propyltriéthoxysilane, le vinyltris(méthyléthylcétoximo)silane, le tétra-kis(méthyléthylcétoximo)silane.

On utilise généralement de 0,1 à 60 parties en poids d'agent de réticulation **A4** pour 100 parties en poids de l'organopolysiloxane **A3**. De préférence, on utilise de 0,5 à 15 parties en poids pour 100 parties en poids de l'organopolysiloxane **A3**.

Dans les deux modes de réalisation ci-dessus, la base silicone **A** peut également comprendre des additifs fonctionnels habituels dans les compositions silicones. Comme familles d'additifs fonctionnels usuels, on peut citer :

- les charges ;
- les promoteurs d'adhérence ;
- les inhibiteurs ou retardateurs de la réaction d'hydrosilylation ;
- les résines silicones ;
- les pigments ; et
- les additifs de tenue thermique, de tenue aux huiles ou de tenue au feu, par exemple les oxydes métalliques.

**Les charges** éventuellement prévues sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 μm (micromètres) et une surface spécifique BET supérieure à 30 m2/g, de préférence comprise entre 30 et 350 m2/g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium éventuellement traité en surface par des acides gras, l'oxyde de zinc, le mica, le talc, l'oxyde de fer, le sulfate de baryum et la chaux éteinte. Ces charges ont une granulométrie généralement comprise entre 0,001 et 300 μm (micromètres) et une surface BET inférieure à 100 m2/g. De façon pratique mais non limitative, les charges employées peuvent être un mélange de quartz et de silice. Les charges peuvent être traitées par tout produit approprié. Sur le plan pondéral, on préfère mettre en oeuvre une quantité de charge comprise entre 1% et 50% en poids, de préférence entre 1% et 40% en poids par rapport à l'ensemble des constituants de la base silicone **A.**

**Les promoteurs d'adhésion** sont largement utilisés dans les compositions silicones. Avantageusement, dans le procédé selon l'invention on peut mettre en oeuvre un ou plusieurs promoteurs d'adhésion choisis parmi le groupe constitué par:

- les organosilanes alcoxylés contenant, par molécule, au moins un groupe alcényle en $C_2$-$C_6$, sélectionnés parmi les produits de formule générale suivante (DI):

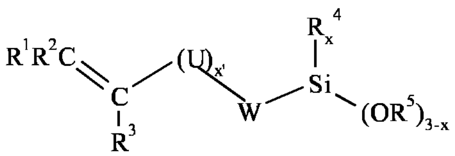
(D.1)

formule dans laquelle :
- $R^1$, $R^2$, $R^3$ sont des radicaux hydrogénés ou hydrocarbonés identiques ou différents entre eux et représentent un atome d'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$-$C_4$,
- W est un lien valentiel,
- $R^4$ et $R^5$ sont des radicaux identiques ou différents et représentent un alkyle en $C_1$-$C_4$ linéaire ou ramifié,
- x' = 0 ou 1, et
- x = 0 à 2.
- les composés organosiliciés comprenant au moins un radical époxy, choisis parmi :

a) les produits (D.2a) répondant à la formule générale suivante :

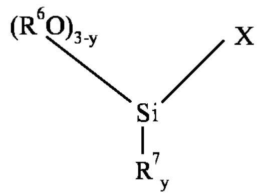

(D.2a)

formule dans laquelle :

- $R^6$ est un radical alkyle linéaire ou ramifié en $C_1$-$C_4$,
- $R^7$ est un radical alkyle linéaire ou ramifié en $C_1$-$C_4$,
- y est égal à 0, 1, 2 ou 3, et
- X étant défini par la formule suivante :

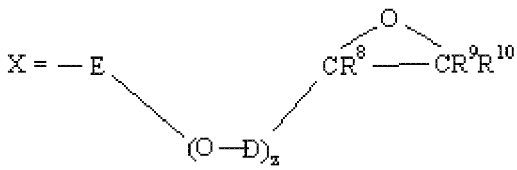

avec :

- E et D qui sont des radicaux identiques ou différents choisis parmi les alkyles en $C_1$-$C_4$ linéaires ou ramifiés,
- z qui est égal à 0 ou 1,
- $R^8$, $R^9$, $R^{10}$ qui sont des radicaux identiques ou différents représentant un atome d'hydrogène ou un alkyle linéaire ou ramifié en $C_1$-$C_4$, et
- $R^8$ et $R^9$ ou $R^{10}$ pouvant alternativement constituer ensemble et avec les deux carbones porteurs de l'époxy, un cycle alkyle ayant de 5 à 7 chaînons, ou

b) les produits (D.2b) constitués par des polydiorganosiloxanes époxyfonctionnels comportant :

(i) au moins un motif siloxyle de formule (D.2 bi) :

$$X_p G_q SiO \frac{4-(p+q)}{2} \quad \text{(D.2 bi)}$$

formule dans laquelle :

- X est le radical tel que défini ci-dessus pour la formule (D.2 a)
- G est un groupe hydrocarboné monovalent choisi parmi les groupes alkyles ayant de 1 à 8 atomes de carbone inclus, éventuellement substitués par au moins un atome d'halogène, et ainsi que parmi les groupes aryles contenant entre 6 et 12 atomes de carbone,
- p = 1 ou 2,
- q = 0, 1 ou 2,
- p + q = 1, 2 ou 3 et

et (ii) éventuellement au moins un motif siloxyle de formule (D.2 bii):

$$G_r SiO \frac{4-r}{2} \quad \text{(D.2 bii)}$$

formule dans laquelle :

- G a la même signification que ci-dessus et
- r est égal à 0, 1, 2 ou 3.

- les composés organosiliciés comprenant au moins une fonction hydrogénosilyle et au moins un radical époxy et
- les chélates de métal M et/ou les alcoxydes métalliques de formule générale : $M(OJ)_n$, dans laquelle

M est choisi dans le groupe formé par : Ti, Zr, Ge, Li, Mn, Fe, Al et Mg ou leurs mélanges n = valence de M et J = alkyle linéaire ou ramifié en $C_1$-$C_8$,.

De préférence M est choisi dans la liste suivante : Ti, Zr, Ge, Li ou Mn, et encore plus préférentiellement le métal M est le Titane. On peut lui associer, par exemple, un radical alkoxy de type butoxy.

**Les résines silicones** sont des oligomères ou polymères organopolysiloxanes ramifiés bien connus et disponibles dans le commerce. Elles présentent, dans leur structure, au moins deux motifs différents choisis parmi ceux de formule $R_3SiO_{1/2}$ (motif M), $R_2SiO_{2/2}$ (motif D), $RSiO_{3/2}$(motif T) et $SiO_{4/2}$ (motif Q), l'un au moins de ces motifs étant un motif T ou Q. Les radicaux R sont identiques ou différents et sont choisis parmi les radicaux alkyles linéaires ou ramifiés en C1 - C6, hydroxyle, phényle, trifluoro-3,3,3 propyle. On peut citer par exemple comme radicaux alkyles, les radicaux méthyle, éthyle, isopropyle, tertiobutyle et n-hexyle.

Comme exemples d'oligomères ou de polymères organopolysiloxanes ramifiés, on peut citer les résines MQ, les résines MDQ, les résines TD et les résines MDT, les fonctions hydroxyles pouvant être portées par les motifs M, D et/ou T. Comme exemple de résines qui conviennent particulièrement bien, on peut citer les résines MDQ hydroxylées ayant une teneur pondérale en groupe hydroxyle comprise entre 0,2 et 10 % en poids.

Tensioactif siliconé non-ionique **B**

L'émulsion directe **E** de silicone dans l'eau comprend un tensioactif siliconé non-ionique **B** ayant un point de trouble compris entre 10 et 50°C, de préférence entre 15 et 45°C , ledit tensioactif siliconé non-ionique B étant un copolymère organopolysiloxane-polyoxyalkylène.

Le point de trouble du tensioactif siliconé non-ionique **B** peut être compris entre 16 et 43°C.

La notion de point de trouble d'un tensioactif non-ionique est bien connue de l'homme de l'art. En effet, il est établi dans la littérature que la solubilité dans l'eau des tensioactifs non-ioniques diminue avec la température. A partir d'une certaine température, une solution aqueuse d'un tensioactif non-ionique s'opacifie et devient trouble, car la solubilité du tensioactif est trop faible.

Le point de trouble d'un tensioactif non-ionique est la température au-dessus de laquelle une solution aqueuse de tensioactif s'opacifie et devient trouble. Avantageusement, le point de trouble est mesuré pour une solution aqueuse à 1% en masse de tensioactif dans de l'eau.

Le point de trouble du tensioactif peut être déterminé par le test suivant : le tensioactif est introduit à une concentration massique de 1% dans de l'eau distillée, sous agitation constante et avec contrôle de la température par une plaque chauffante. Si la solution est limpide à température ambiante, on chauffe jusqu'à obtention d'une opacité complète, puis on refroidit lentement et l'on détermine la température pour laquelle l'opacité disparait. Pour le cas où la solution est déjà opaque ou trouble à température ambiante, on la refroidit et, de même, on détermine la température pour laquelle l'opacité disparait. Cette température de disparition de l'opacité constitue le point de trouble ou température de trouble du tensioactif.

Le tensioactif siliconé non-ionique **B** est un copolymère organopolysiloxane-polyoxyalkylène. Ces copolymères sont également connus sous le nom de copolymères organopolysiloxane-polyéther. De préférence, le copolymère organopolysiloxane-polyoxyalkylène **B** comprend des motifs siloxyles ayant des séquences de chaines d'oxyde d'éthylène, et, éventuellement, des séquences de chaines d'oxyde de propylène.

De préférence, le copolymère organopolysiloxane-polyoxyalkylène **B** comprend des motifs siloxyles de formule (B-1)

$$[R^1_aZ_bSiO_{(4-a-b)/2}]_n \qquad \text{(B-1)}$$

dans laquelle

- les radicaux $R^1$, identiques ou différents, représentent un radical hydrocarboné ayant de 1 à 30 atomes de carbone, de préférence choisi parmi les groupes alkyles ayant de 1 à 8 atomes de carbone et les groupes aryles ayant de 6 à 12 atomes de carbones

- n est un nombre entier supérieur ou égal à 2;
- a et b sont indépendamment 0, 1, 2 ou 3, et a+b = 0, 1, 2 ou 3;
- chaque radical Z est un groupe $-R^2-(OC_pH_{2p})_q(OC_rH_{2r})_s-OR^3$, où

  o $R^2$ est un groupe hydrocarboné divalent ayant de 2 à 20 atomes de carbone, ou une liaison;
  o $R^3$ est H ou un groupe $R^1$ tel que défini ci-dessus,
  o p et r sont, indépendamment, un entier entre 1 et 6;
  o q et s sont, indépendamment, 0 ou un entier tel que $1<q + s< 400$;
  et chaque molécule de copolymère organopolysiloxane-polyoxyalkylène B comprend au moins un groupe Z.

Dans un mode de réalisation préféré, le copolymère organopolysiloxane-polyoxyalkylène **B** comprend des motifs de formule (B-1) ci-dessus dans laquelle

- n est un nombre entier supérieur ou égal à 2;
- a et b sont indépendamment 0, 1, 2 ou 3, et a+b = 0, 1, 2 ou 3;
- les radicaux $R^1$, identiques ou différents, représentent un groupe alkyle ayant de 1 à 8 atomes de carbone inclus, et plus préférentiellement $R^1$ est un groupe méthyle ;

  o $R^2$ est un groupe hydrocarboné divalent ayant de 2 à 6 atomes de carbone ou une liaison;
  o $R^3$ est H ou un groupe alkyl ayant de 1 à 8 atomes de carbone inclus, de préférence $R^3$ est H
  o p = 2 et r = 3
  o q est compris entre 1 et 40, de préférence entre 5 et 30
  o s est compris entre 1 et 40, de préférence entre 5 et 30

  et chaque molécule de copolymère organopolysiloxane-polyoxyalkylène **B** comprend au moins un groupe Z.

Avantageusement, le copolymère organopolysiloxane-polyoxyalkylène **B** comprend des motifs de formule (B-1) ci-dessus dans laquelle b = 0 ou 1.

Selon un mode de réalisation, **B** est un organopolysiloxane ayant un nombre total de motifs siloxyles de formule (B-1) compris entre 1 et 200, de préférence entre 50 et 150, et un nombre total de groupes Z compris entre 2 et 25, de préférence entre 3 et 15.

Un exemple de copolymère organopolysiloxane-polyoxyalkylène **B** qui peut être utilisé dans le présent procédé correspond à la formule (B-2)

$$R^a_3SiO[R_2^aSiO]_t[R^aSi(R^b-(OCH_2CH_2)_x(OCH_2CH_2CH_2)_y-OH)O]_rSiR^a_3 \qquad (B-2)$$

dans laquelle

- chaque $R^a$ est indépendamment sélectionné parmi les groupes alkyle ayant de 1 à 8 atomes de carbone inclus, de préférence $R^a$ est un groupe méthyle ;
- chaque $R^b$ est un groupe hydrocarboné divalent ayant de 2 à 6 atomes de carbone, ou une liaison, de préférence $R^b$ est un groupe propyle.
- x et y sont indépendamment des entiers compris entre 1 et 40, de préférence entre 5 et 30, et plus préférentiellement entre 10 et 30,
- t est compris entre 1 et 200, de préférence entre 25 et 150, et
- r est compris entre 2 et 25, de préférence entre 3 et 15.

Les méthodes de préparation des copolymères organopolysiloxane-polyoxyalkylène **B** sont bien connues de l'homme du métier. Par exemple, un copolymère organopolysiloxane-polyoxyalkylène peut être préparé par hydrosilylation en faisant réagir, par exemple, un polydiorganosiloxane comprenant une liaison Si-H avec un polyoxyalkylène comprenant des groupes ayant des insaturations aliphatiques, en présence d'un catalyseur au platine.

Selon un mode de réalisation particulier, le copolymère organopolysiloxane-polyoxyalkylène **B** est choisi parmi

- les composés de formule (B-3):

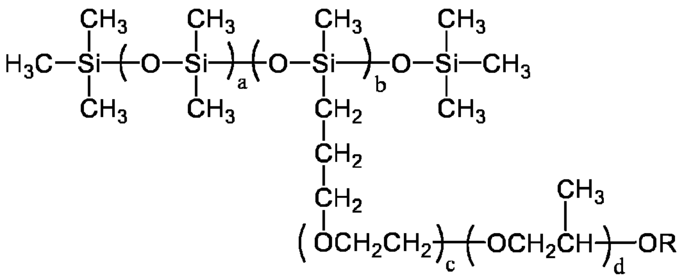

(B-3)

où

- ◦ $0 \leq a \leq 100$ ; $1 \leq b \leq 100$; $0 \leq c \leq 100$ ; $0 \leq d \leq 100$ et $c + d \geq 1$ ;
- o R est H ou un groupe alkyle ayant de 1 à 6 atomes de carbone inclus

- les silicones polyéthers de formule (B-4)

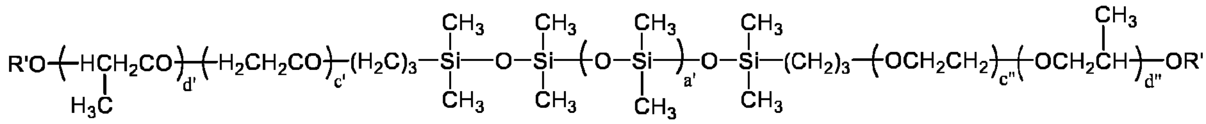

(B4)

où

- ◦ $0 \leq a' \leq 100$ ; $0 \leq c' \leq 100$ ; $0 \leq d' \leq 100$ ; $0 \leq c'' \leq 100$ ; $0 \leq d'' \leq 100$ ; $c' + d' + c'' + d'' \geq 1$ ;
- o chaque R' est, indépendamment, H ou un groupe alkyle ayant de 1 à 6 atomes de carbone inclus

- et leurs mélanges.

La quantité de tensioactif siliconé non ionique **B** est comprise entre 0,1 et 70% par rapport à la masse totale de base silicone contenue dans l'émulsion, de préférence entre 0,5 et 50%, préférentiellement entre 1 et 25%, et encore plus préférentiellement entre 2 et 20%.

Catalyseur **C**

L'émulsion directe **E** de silicone dans l'eau peut également comprendre un catalyseur **C.** Ce catalyseur sert à catalyser la réaction de polyaddition ou de polycondensation de la base silicone **A.**

Dans le premier mode de réalisation, où la base silicone **A** est une base réticulable par polyaddition, le catalyseur **C** est un catalyseur de réaction d'hydrosilylation. Ces catalyseurs sont bien connus. On utilise, de préférence, les composés du platine et du rhodium. On peut, en particulier, utiliser les complexes du platine et d'un produit organique décrit dans les brevets US-A-3 159 601, US A 3 159 602, US-A-3 220 972 et les brevets européens EP-A-0.057.459, EP A 0.188.978 et EP-A-0.190.530, les complexes du platine et d'organosiloxanes vinylés décrits dans les brevets US-A-3 419 593, US-A-3 715 334, US-A-3 377 432 et US A 3 814 730. Le catalyseur généralement préféré est le platine. Dans ce cas, la quantité pondérale de catalyseur **C**, calculée en poids de platine-métal, est généralement comprise entre 2 et 400 ppm, de préférence entre 5 et 200 ppm basée sur le poids total des organopolysiloxanes **A1** et **A2.** Dans ce cas, le catalyseur **C** peut être un catalyseur au platine, par exemple un catalyseur de Karstedt.

Dans le second mode de réalisation, où la base silicone **A** est une base réticulable par polycondensation, le catalyseur **C** est un catalyseur de réaction de condensation. Sans vouloir se limiter, le catalyseur de polycondensation pourra entre autres être choisi parmi les complexes ou chélates métalliques à base d'étain ou titane largement connus de l'homme du métier ou parmi les catalyseurs organiques comme les amines ou guanidines décrites dans les demandes de brevet EP2268743 et EP2367867 ou parmi les complexes métalliques par exemple à base de Zn, Mo, Mg, etc. décrits dans les demandes de brevet EP2222626, EP2222756, EP2222773, EP2935489, EP2935490 et WO2015/082837.

**Eau D**

L'émulsion directe **E** de silicone dans l'eau comprend de l'eau. Avantageusement, l'émulsion comprend entre 10 et 80% d'eau en masse par rapport à la masse totale de l'émulsion, de préférence entre 30 et 75%, et encore plus préférentiellement entre 35 et 65%. Selon un mode de réalisation spécifique, l'émulsion comprend plus de 50% d'eau en masse par rapport à la masse totale de l'émulsion. L'émulsion peut comprendre entre 50,5 et 80% d'eau en masse par rapport à la masse totale de l'émulsion, de préférence entre 51 et 75%, et encore plus préférentiellement entre 52 et 65%.

Epaississant **F**

L'émulsion directe **E** de silicone dans l'eau peut également comprendre un épaississant **F.** L'épaississant **F** peut être choisi parmi différents types d'épaississants, parmi lesquels on peut citer les épaississants organiques, les épaississants inorganiques, les épaississants naturels et les épaississants synthétiques. L'épaississant F peut être choisi parmi les épaississants à base de gomme naturelle, comme par exemple les gommes de types xanthane et les gommes succinoglycane. L'épaississant **F** peut également être choisi parmi les fibres de cellulose.

L'épaississant **F** permet de modifier la viscosité de l'émulsion. L'homme du métier saura adapter la quantité d'épaississant en fonction de la viscosité souhaitée. Avantageusement, la quantité d'épaississant dans l'émulsion **E** est comprise entre 0,01 et 30% en masse par rapport à la masse de la base silicone **A**, entre 0,1 et 20% en masse, ou entre 0,5 et 10% en masse.

Selon un mode de réalisation préféré du procédé selon l'invention, l'émulsion directe **E** de silicone dans l'eau comprend

A) une base silicone **A** réticulable par polyaddition comprenant

- o au moins un organopolysiloxane **A1** comprenant, par molécule, au moins 2 groupes alcényle ou alcynyle, linéaire ou ramifié, ayant de 2 à 6 atomes de carbone, et
- o au moins un organohydrogénopolysiloxane **A2** comprenant, par molécule, au moins 2 fonctions hydrogénosilyle Si-H

B) au moins un tensioactif siliconé non-ionique **B** ayant un point de trouble compris entre 10 et 50°C, de préférence entre 15 et 45°C ;
C) éventuellement, au moins un catalyseur **C** ; et
D) de l'eau.

Selon un mode de réalisation particulièrement préféré du procédé selon l'invention, l'émulsion directe **E** de silicone dans l'eau comprend

A) une base silicone **A** réticulable par polyaddition comprenant

- o au moins un organopolysiloxane **A1** comprenant, par molécule, au moins 2 groupes alcényle ou alcynyle, linéaire ou ramifié, ayant de 2 à 6 atomes de carbone, et
- o au moins un organohydrogénopolysiloxane **A2** comprenant, par molécule, au moins 2 fonctions hydrogénosilyle Si-H

B) au moins tensioactif siliconé non-ionique **B** choisi parmi les copolymères organopolysiloxane-polyoxyalkylène ayant un point de trouble compris entre 10 et 50°C, de préférence entre 15 et 45°C ;
C) éventuellement, au moins un catalyseur **C** ; et
D) de l'eau.

*Etapes du procédé*

Le procédé selon l'invention comprend les étapes suivantes :

1) mise en oeuvre de l'émulsion directe **E** de silicone dans l'eau;
2) chauffage de l'émulsion **E** à une température supérieure ou égale à 60°C pour obtenir un matériau silicone poreux; et
3) éventuellement, séchage du matériau silicone poreux, de préférence par chauffage.

L'étape 2) de chauffage est effectuée à une température supérieure ou égale à 60°C, par exemple à une température comprise entre 60 et 200°C, ou entre 70 et 180°C.

L'étape 2) peut durer entre 1 minute et 2 heures, par exemple entre 10 minutes et 1 heure. L'homme du métier saura adapter la température et la durée de l'étape 2) en fonction de l'émulsion mise en oeuvre et/ou du matériau silicone poreux recherché.

A la fin de l'étape 2), un matériau silicone poreux est obtenu. Ce matériau silicone poreux peut être une mousse silicone élastomère. En fonction de la température de l'étape 2), ce matériau peut encore comprendre de l'eau, par exemple, le matériau peut être imbibé d'eau.

Dans certains cas, il peut être nécessaire de sécher le matériau silicone poreux obtenu après l'étape 2), dans une étape 3) de séchage. Cette étape de séchage est facultative, elle peut être effectuée en chauffant le matériau silicone poreux, par exemple, à une température supérieure ou égale à 100°C. Avantageusement, le matériau silicone poreux est séché à une température comprise entre 100 et 200°C, de préférence entre 100 et 150°C. Il est également possible de laisser sécher le matériau silicone poreux à l'air.

L'étape 2) de chauffage et l'étape 3) de séchage peuvent être concomitantes. Cela peut être le cas lorsque l'étape 2) est effectuée à une température supérieure ou égale à 100°C, par exemple à une température comprise entre 100 et 200°C.

Selon un mode de réalisation particulier, l'étape 1) est une étape d'enduction d'un support avec une émulsion directe **E** de silicone dans l'eau.

Cette étape d'enduction est l'application d'au moins une couche d'émulsion directe **E** de silicone dans l'eau sur le support.

L'étape d'enduction peut notamment être réalisée par racle, en particulier par racle sur cylindre, racle en l'air et racle sur tapis, par foulardage, notamment par exprimage entre deux rouleaux ou encore par rouleau lécheur, cadre rotatif, rouleau inverse "reverse roll", par transfert, par sérigraphie, par héliographie, ou par pulvérisation.

L'enduction est effectuée sur au moins une des faces du support. L'enduction peut être totale ou partielle, c'est à dire que l'enduction peut être effectuée sur la totalité de la surface d'au moins une des faces du support ou sur une ou plusieurs parties d'au moins une des faces du support.

La couche d'émulsion directe **E** de silicone dans l'eau peut également imprégner le support, en pénétrant à l'intérieur du support.

La couche d'émulsion directe **E** de silicone dans l'eau sur le support peut être de l'ordre de quelques centaines de micromètres à quelques millimètres.

Les supports destinés à être enduits sont généralement des supports fibreux par exemple des tissus, des non tissés ou des tricots ou plus généralement tout support fibreux comprenant des fibres et/ou des fibres choisis dans le groupe de matériaux comprenant : le verre, la silice, les métaux, la céramique, le carbure de silicium, le carbone, le bore, les fibres naturelles comme le coton, la laine, le chanvre, le lin, les fibres artificielles comme la viscose, ou des fibres cellulosiques, les fibres synthétiques comme les polyesters, les polyamides, les polyacryliques, les chlorofibres, les polyoléfines, les caoutchoucs synthétiques, l'alcool polyvinylique, les aramides, les fluorofibres, les phénoliques ...

Les supports destinés à être enduits incluent les textiles architecturaux. Par "*textile architectural*", on entend un tissu ou non tissé et plus généralement tout support fibreux destiné après revêtement à la confection :

- d'abris, de structures mobiles, de bâtiments textiles, de cloisons, de portes souples, de bâches, de tentes, de stands ou de chapiteaux ;
- de mobiliers, de bardages, d'écrans publicitaires, de brise-vent ou panneaux filtrants ;
- de protections solaires, de plafonds et de stores.

L'invention concerne également un procédé d'enduction d'un support comprenant les étapes suivantes :

1) enduction d'un support avec une émulsion directe **E** de silicone dans l'eau comprenant:

A) une base silicone **A** réticulable par polycondensation ou polyaddition ;
B) au moins un tensioactif siliconé non-ionique **B** ayant un point de trouble compris entre 10 et 50°C, de préférence entre 15 et 45°C, ledit tensioactif siliconé non-ionique B étant un copolymère organopolysiloxane-polyoxyalkylène;
C) éventuellement, au moins un catalyseur **C** ; et
D) de l'eau ;

2) chauffage de l'émulsion **E** à une température supérieure ou égale à 60°C pour obtenir un matériau silicone poreux; et

3) éventuellement, séchage du matériau silicone poreux, de préférence par chauffage.

Emulsion directe **E** de silicone dans l'eau

L'invention a également pour objet une émulsion directe E de silicone dans l'eau comprenant

A) une base silicone **A** réticulable par polycondensation ou polyaddition ;
B) au moins un tensioactif siliconé non-ionique **B** ayant un point de trouble compris entre 10 et 50°C, de préférence entre 15 et 45°C, ledit tensioactif siliconé non-ionique B étant un copolymère organopolysiloxane-polyoxyalkylène;
C) éventuellement, au moins un catalyseur C ; et
D) de l'eau.

Les modes de réalisations de l'émulsion décrits ci-dessus dans la partie procédé s'appliquent également à l'émulsion directe **E** de silicone dans l'eau en tant que telle. Cette émulsion directe **E** de silicone dans l'eau peut être utilisée pour mettre en oeuvre le procédé décrit ci-dessus.

Matériau silicone poreux

L'invention a également pour objet un matériau silicone poreux comprenant au moins un tensioactif siliconé non-ionique **B** ayant un point de trouble compris entre 10 et 50°C, de préférence entre 15 et 45°C, ledit tensioactif siliconé non-ionique B étant un copolymère organopolysiloxane-polyoxyalkylène.
La quantité de tensioactif **B** peut être comprise entre 0,5 et 50% en masse de tensioactif **B** par rapport à la masse totale du matériau, de préférence entre 1 et 25%, et plus préférentiellement entre 2 et 15%.
L'invention a également pour objet un matériau silicone poreux susceptible d'être obtenu par chauffage de l'émulsion directe **E** de silicone dans l'eau décrite ci-dessus à une température supérieure ou égale à 60°C.
Avantageusement, le matériau a une densité inférieure à 0,9 g/$cm^3$, de préférence inférieure à 0,6 g/$cm^3$, et encore plus préférentiellement inférieure à 0,4 g/$cm^3$.
La taille des pores du matériau silicone poreux peut varier de quelques $\mu$m à quelques centaines de $\mu$m.
Le matériau silicone poreux a une porosité ouverte et/ou fermée. De préférence, le matériau a une porosité majoritairement ouverte.
Selon un mode de réalisation particulier, le matériau silicone poreux a une porosité majoritairement ouverte et des pores ayant une taille inférieure ou égale à 500 $\mu$m.

Support enduit d'un matériau silicone poreux

Enfin, l'invention a pour objet un support enduit d'un matériau silicone poreux tel que décrit ci-dessus. Le support peut être totalement ou partiellement enduit. Le support peut également être imprégné d'un matériau silicone poreux tel que décrit ci-dessus.
Le support peut être choisi parmi les supports listés ci-dessus.

## EXEMPLES

### Protocoles

Détermination de la taille des pores :

La taille des pores est déterminée par microscopie électronique à balayage ou par tomographie.

Détermination du point de trouble des tensioactifs :

Le tensioactif est introduit à une concentration massique de 1% dans de l'eau distillée, sous agitation constante et avec contrôle de la température par une plaque chauffante. Si la solution est limpide à température ambiante, on chauffe jusqu'à obtention d'une opacité complète, puis on refroidit lentement et l'on détermine la température pour laquelle l'opacité disparait. Pour le cas où la solution est déjà opaque ou trouble à température ambiante, on la refroidit et, de même, on détermine la température pour laquelle l'opacité disparait. Cette température de disparition de l'opacité constitue le point de trouble ou température de trouble du tensioactif.

Préparation des émulsions de silicone-dans-l'eau :

A température ambiante, dans un bécher, la base silicone (A) réticulable par polyaddition est introduite et

mélangée avec le tensioactif (B) pendant 3 minutes à l'aide d'un rotor-stator de type ultra-turrax à une vitesse de 16 000 rpm environ. L'eau (D) est ensuite introduite progressivement, toujours sous agitation, pendant environ 10 minutes ; il en résulte une émulsion directe de type silicone-dans-l'eau blanche et fluide (sauf exemple comparatif 1.6).

Formation de matériau silicone poreux à partir des émulsions :

Du platine de Karstedt préalablement émulsifié dans l'eau (C) est ajouté à l'émulsion silicone-dans-l'eau obtenue ci-dessus. L'émulsion catalysée résultante, qui est une émulsion directe de type silicone-dans-l'eau, est placée dans un bain thermostaté à 90°C pendant 30 minutes. Une fois réticulée, un matériau poreux imbibé est obtenu. Il est rincé trois fois à l'éthanol puis placé dans une étuve pendant deux heures à 115°C.

Enduction et formation de mousse en couche mince à partir des émulsions :

L'émulsion catalysée est appliquée à la racle sur un tissu de verre préalablement hydrofugé, à raison d'environ 50 grammes par mètre carré. Le tissu enduit est passé à l'étuve à 120°C pendant 10 à 20 minutes pour permettre la formation du matériau poreux.

Protocole de mesure de densité des matériaux silicones poreux ($\rho_f$) :

Un parallélépipède de mousse est découpé soigneusement aux ciseaux, (typiquement : 7,5 g, 50 mm de long (l), 30 mm de large (L) et 20 mm d'épaisseur(e)). Il est pesé (Ms). La densité de la mousse est calculée via le calcul suivant :

$$\rho f = \frac{Ms}{Véchantillon} = \frac{Ms}{l \times L \times e}$$

Protocole de mesure du pourcentage de porosité ouverte (%PO) :

Un parallélépipède de mousse est découpé soigneusement aux ciseaux, (typiquement : 7,5 g, 50 mm de long (l), 30 mm de large (L) et 20 mm d'épaisseur(e)). Il est pesé sec dans un premier temps (Ms) puis immergé dans un bécher d'eau distillée (50 mL) ; le tout est placé sous pression réduite (50 mbar) dans un dessiccateur pendant 120 min. Ensuite, l'échantillon est prélevé, rapidement séché sur papier absorbant pour éliminer l'eau à la surface des 6 faces du parallélépipède puis immédiatement pesé (Mi). Le pourcentage de porosité ouverte est obtenu à l'aide du calcul suivant :

$$\%PO = \frac{Veau}{Vcellules} \times 100 = \frac{Mi - Ms}{(l \times L \times e) - \frac{Ms}{\rho p}} \times 100$$

Avec :

| | |
|---|---|
| %PO | pourcentage de porosité ouverte |
| $V_{eau}$ | volume d'eau inséré dans la mousse |
| $M_s$ | masse initiale du parallélépipède de mousse |
| $M_i$ | masse de l'échantillon imbibé d'eau |
| l, L et e | les dimensions du parallélépipède |
| $\rho_p$ | densité du matériau silicone (≈ 1 g/cm$^3$) |

Protocole de mesure du module en compression :

La compression des échantillons (cylindriques ; découpé, à l'emporte-pièce, 10 mm de hauteur par 10 mm de diamètre) est effectuée via une machine dite "Material Testing System" (MTS) à la vitesse de 200 mm/min. Elle est moyennée sur 10 échantillons par mousse. Le module E en compression est déduit via le coefficient directeur de la tangente à la courbe dans la zone élastique du matériau.

Protocole de mesure du module en traction et de l'allongement à la rupture :

La traction est effectuée sur des échantillons en forme d'haltère de type H2 via une machine dite "Material Testing System" (MTS) à la vitesse de 500 mm/min. Le module E en traction est déduit via le coefficient directeur de la tangente à la courbe dans la zone élastique du matériau. L'allongement à la rupture (A%) est déduit via le calcul suivant :

$$A\% = \frac{Lu - Lo}{Lo} \times 100$$

Avec :

*Lo* longueur de l'échantillon au repos avant traction
*Lu* longueur de l'échantillon juste avant la rupture

**Réactifs utilisés**

Dans les exemples, les quantités sont exprimées en parties en poids, sauf indications contraires.

HVI1: huile polydiméthylsiloxane bloquée à chacune des extrémités des chaînes par un motif $(CH_3)_2ViSiO_{1/2}$, ayant une viscosité de 230 mPa.s
HVI2 : huile polydiméthylsiloxane bloquée à chacune des extrémités des chaînes par un motif $(CH_3)_2ViSiO_{1/2}$, ayant une viscosité de 1000 mPa.sHuile
SiH1: Organohydrogénopolysiloxane ayant une teneur massique en fonctions hydrogénosilyle Si-H de 46%
Résine SiH: résine MQ ayant une teneur massique en fonctions hydrogénosilyle Si-H de 26%
Platine 909: catalyseur au platine sous forme d'émulsion ayant une teneur massique en Platine de 0,085%
Huile SiH2 : Organohydrogénopolysiloxane ayant une teneur massique en fonctions hydrogénosilyle Si-H de 20%
Huile SiH3 : Organohydrogénopolysiloxane ayant une teneur massique en fonctions hydrogénosilyle Si-H de 4,75%
Rhodopol® : gomme de type xanthane
Rheozan® : gomme succinoglycane

Différents tensioactifs ont été testés :

- des copolymères organopolysiloxane-polyoxyalkylène (tensioactifs siliconés non ionique) de Siltech (Silsurf® A010-D-UP) et d'Evonik (famille des Tegopren®)
- des tensioactifs non siliconés, à chaine grasse carbonée et chaine éthoxylée (Rhodasurf® ROX et Brij®)

Les caractéristiques des différents tensioactifs utilisés sont présentées dans les tableaux 1 et 2 ci-dessous.

Tableau 1 : caractéristiques des copolymères organopolysiloxane-polyoxyalkylène

| Tensioactif | Mw (g/mol) | Mw/Mn | Fonctions OE/OP | % wt OE/OP | % wt Si/ organique | Point de trouble en °C (1 % wt) |
|---|---|---|---|---|---|---|
| Tegopren® 5831 | 7 000 | 3,66 | 40/60 | 34/66 | 75/25 | < 0 |
| Tegopren® 5840 | 300 | 3,55 | 59/41 | 52/48 | 34/66 | 25 |
| Tegopren® 5847 | 550 | 1,27 | 77/23 | 72/28 | 33/67 | 57 |
| Tegopren® 5851 | n/a | n/a | 72/28 | 67/33 | 33/67 | 62 |
| Tegopren® 5852 | 1 700 | 2,74 | 25/75 | 20/80 | 33/67 | 18 |
| Tegopren® 5863 | 1 200 | 2,24 | 39/61 | 32/68 | 25/75 | 43 |
| Tegopren® 5878 | 550 | 1,21 | 100/0 | 100/0 | 42/58 | 16 |
| Silsurf® A010-D-UP | 1000 | 1,17 | 72/28 | 66/34 | 31/69 | 43 |

Tableau 2 : caractéristiques des tensioactifs non siliconés

| | Point de trouble en °C (1 % wt) |
|---|---|
| Rhodasurf® ROX | 44 |
| Brij® C10 | 63 |
| Brij® C20 | 95 |

**Exemple 1 : Impact de la structure du tensioactif et de son point de trouble**

Les différents tensioactifs ont été testés, et les propriétés des matériaux silicones poreux ont été déterminées (cf. tableaux 3 et 4).

Tableau 3 : Exemples 1.1 à 1.6 selon l'invention

| | Ex 1.1 | Ex 1.2 | Ex 1.3 | Ex 1.4 | Ex 1.5 | Ex 1.6 |
|---|---|---|---|---|---|---|
| HVI1 | 100 | 100 | 100 | 100 | 100 | 100 |
| HVI2 | 18,2 | 18,2 | 18,2 | 18,2 | 18,2 | 18,2 |
| Huile SiH1 | 2,5 | 2,5 | 2,5 | 2,5 | 2,5 | 2,6 |
| Résine SiH | 1,2 | 1,2 | 1,2 | 1,2 | 1,2 | |
| Platine 909 | 7,1 | 7,1 | 7,1 | 7,1 | 7,1 | 7,1 |
| Eau distillée | 224 | 224 | 224 | 224 | 224 | 224 |
| Tegopren® 5840 | 25,6 | | | | | 25,6 |
| Tegopren® 5863 | | | 25,6 | | | |
| Tegopren® 5878 | | | | 25,6 | | |
| Tegopren® 5852 | | 25,6 | | | | |
| Silsurf® A010-D-UP | | | | | 25,6 | |
| Type d'émulsion obtenue | directe | directe | directe | directe | directe | directe |
| Densité (g/cm$^3$) | 0,19 | 0,26 | 0,21 | 0,24 | 0,19 | 0,21 |
| %Porosité ouverte/%Fermée | 70/11 | 45/29 | 65/14 | 55/21 | Non Mesuré | Ouverte à 55 % |
| Point de trouble tensioactif (°C) | 25 | 18 | 43 | 16 | 43 | 25 |
| Taille de pores ($\mu$m) | 220-400 | 400-650 | 60-100 | 430-500 | Non Mesurée | 60 - 300 |
| Ratio molaire H/Vi | 1,89 | 1,89 | 1,89 | 1,89 | 1,89 | 1,57 |

Tableau 4 : Exemples comparatifs 1.1 à 1.6

| | Ex Comp 1.1 | Ex Comp 1.2 | Ex Comp 1.3 | Ex Comp 1.4 | Ex Comp 1.5 | Ex Comp 1.6 |
|---|---|---|---|---|---|---|
| HVI1 | 100 | 100 | 100 | 100 | 100 | 100 |
| HVI2 | 18,2 | 18,2 | 18,2 | 18,2 | 18,2 | 18,2 |
| Huile SiH1 | 2,5 | 2,5 | 2,5 | 2,5 | 2,5 | 2,5 |
| Résine SiH | 1,2 | 1,2 | 1,2 | 1,2 | 1,2 | 1,2 |
| Platine 909 | 7,1 | 7,1 | 7,1 | 7,1 | 7,1 | 7,1 |
| Eau distillée | 224 | 224 | 224 | 224 | 224 | 224 |
| Brij® C10 | 25,6 | | | | | |
| Brij® C20 | | 25,6 | | | | |

(suite)

| | Ex Comp 1.1 | Ex Comp 1.2 | Ex Comp 1.3 | Ex Comp 1.4 | Ex Comp 1.5 | Ex Comp 1.6 |
|---|---|---|---|---|---|---|
| Tegopren® 5847 | | | 25,6 | | | |
| Tegopren® 5851 | | | | 25,6 | | |
| Rhodasurf® ROX | | | | | 25,6 | |
| Tegopren® 5831 | | | | | | 25,6 |
| Type d'émulsion obtenue | directe | directe | directe | directe | directe | inverse |
| Densité (g/cm$^3$) | n/a | n/a | n/a | n/a | n/a | / |
| %Porosité ouverte/%Fermée | n/a | n/a | n/a | n/a | n/a | / |
| Point de trouble tensioactif (°C) | 63 | 95 | 57 | 62 | 44 | <0 |
| Taille de pores (μm) | n/a | n/a | n/a | n/a | n/a | / |
| Ratio molaire H/Vi | 1,89 | 1,89 | 1,89 | 1,89 | 1,89 | 1,89 |

Les exemples 1.1 à 1.6 selon l'invention (tableau 3) ont été réalisés avec des tensioactifs siliconés non-ionique ayant des points de trouble compris entre 10 et 50°C selon l'invention. Ces tensioactifs permettent la formation d'une émulsion directe de silicone dans l'eau et les matériaux silicones poreux obtenus sont de bonne facture, ils ne sont pas friables. Par ailleurs, la porosité des matériaux silicones poreux obtenus est majoritairement ouverte et la densité des matériaux est basse (< 0,3g/cm$^3$). La taille moyenne des pores varient de quelques dizaines de μm à quelques centaines de μm.

Les exemples comparatifs 1.1 et 1.2 (tableau 4) ont été réalisés avec des tensioactifs non siliconés ayant des points de trouble élevés (> 50°C). Ces tensioactifs permettent la formation d'une émulsion directe de silicone dans l'eau, mais aucun matériau silicone poreux n'a été obtenu lors de ces essais.

Les exemples comparatifs 1.3 et 1.4 (tableau 4) ont été réalisés avec des tensioactifs siliconés non-ionique ayant des points de trouble élevés (> 50°C). Ces tensioactifs permettent la formation d'une émulsion de silicone dans l'eau, mais les matériaux silicones poreux obtenus ne sont pas de bonne facture car ils sont friables. Ainsi, il n'est pas possible de les utiliser ou de déterminer leurs propriétés.

L'exemple comparatif 1.5 (tableau 4) a été réalisé avec un tensioactif non siliconé ayant un point de trouble compris entre 10 et 50°C. Ce tensioactif permet la formation d'une émulsion de silicone dans l'eau, mais aucun matériau silicone poreux n'a été obtenu lors de cet essai.

L'exemple comparatif 1.6 (tableau 4) a été réalisé avec un tensioactif siliconé non-ionique ayant un point de trouble bas (< 0°C). Ce tensioactif ne permet pas la formation d'une émulsion de silicone dans l'eau, ainsi, aucun matériau silicone poreux n'a été obtenu lors de cet essai.

Au regard de ces essais, il est donc nécessaire d'utiliser un tensioactif siliconé non-ionique ayant un point de trouble compris entre 10 et 50°C pour obtenir un matériau silicone poreux de bonne facture.

**Exemple 2 : Impact de la concentration en tensioactif**

Le tensioactif Tegopren® 5840 a été utilisé. La quantité de tensioactif a été variée de 2,5 à 50% en masse par rapport à la masse de silicone pour cet exemple. La densité des matériaux silicones poreux obtenus a été déterminée (cf. tableau 5).

Tableau 5 : Exemples 2.1 à 2.7

| | Ex 2.1 | Ex 2.2 | Ex 2.3 | Ex 2.4 | Ex 2.5 | Ex 2.6 | Ex 2.7 |
|---|---|---|---|---|---|---|---|
| HVI1 | 100 | 100 | 100 | 100 | 100 | 100 | 100 |
| HVI2 | 18,2 | 18,2 | 18,2 | 18,2 | 18,2 | 18,2 | 18,2 |
| Huile SiH1 | 2,5 | 2,5 | 2,5 | 2,5 | 2,5 | 2,5 | 2,5 |
| Résine SiH | 1,2 | 1,2 | 1,2 | 1,2 | 1,2 | 1,2 | 1,2 |

(suite)

| | Ex 2.1 | Ex 2.2 | Ex 2.3 | Ex 2.4 | Ex 2.5 | Ex 2.6 | Ex 2.7 |
|---|---|---|---|---|---|---|---|
| Platine 909 | 7,1 | 7,1 | 7,1 | 7,1 | 7,1 | 7,1 | 7,1 |
| Eau distillée | 224,0 | 224,0 | 224,0 | 224,0 | 224,0 | 224,0 | 224,0 |
| Tegopren® 5840 | 3,8 | 6,4 | 12,8 | 25,6 | 38,4 | 51,2 | 64,0 |
| Densité (g/cm$^3$) | 0,38 | 0,34 | 0,20 | 0,18 | 0,24 | 0,26 | 0,28 |

Toutes les concentrations testées permettent d'obtenir un matériau silicone poreux de bonne facture.

**Exemple 3 : impact de la quantité d'eau dans l'émulsion**

Le tensioactif Tegopren® 5840 a été utilisé. La quantité d'eau dans l'émulsion a été variée de 10 à 70% en masse par rapport à la masse de silicone pour cet exemple. La densité des matériaux silicone poreux obtenus a été déterminée (cf. tableau 6).

Tableau 6 : Exemples 3.1 à 3.7

| | Ex 3.1 | Ex 3.2 | Ex 3.3 | Ex 3.4 | Ex 3.5 | Ex 3.6 | Ex 3.7 |
|---|---|---|---|---|---|---|---|
| HVI1 | 100 | 100 | 100 | 100 | 100 | 100 | 100 |
| HVI2 | 18,2 | 18,2 | 18,2 | 18,2 | 18,2 | 18,2 | 18,2 |
| Huile SiH1 | 2,5 | 2,5 | 2,5 | 2,5 | 2,5 | 2,5 | 2,5 |
| Résine SiH | 1,2 | 1,2 | 1,2 | 1,2 | 1,2 | 1,2 | 1,2 |
| Platine 909 | 7,1 | 7,1 | 7,1 | 7,1 | 7,1 | 7,1 | 7,1 |
| Eau | 20,0 | 45,0 | 77,0 | 120,0 | 180,0 | 270,0 | 421,0 |
| Tegopren® 5840 | 25,6 | 25,6 | 25,6 | 25,6 | 25,6 | 25,6 | 25,6 |
| Densité (g/cm$^3$) | 0,75 | 0,69 | 0,55 | 0,32 | 0,28 | 0,18 | 0,24 |

Tous les exemples permettent d'obtenir un matériau silicone poreux de bonne facture. Dès lors que l'émulsion contient plus de 35% d'eau en masse, la densité du matériau est relativement faible.

**Exemple 4 : impact de l'huile Si-H**

Différentes huiles Si-H avec des teneurs massiques en fonctions hydrogénosilyle Si-H différentes ont été testées. Le ratio H/Vi reste sensiblement le même pour ces essais. La densité des matériaux silicones poreux obtenus a été déterminée (cf. tableau 7).

Tableau 7 : Exemples 4.1 à 4.3

| | Ex 4.1 | Ex 4.2 | Ex 4.3 |
|---|---|---|---|
| HVI1 | 100 | 100 | 100 |
| HVI2 | 18,2 | 18,2 | 18,2 |
| Huile SiH1 | 2,5 | | |
| Huile SiH2 | | 6,7 | |
| Huile SiH3 | | | 27,7 |
| Résine SiH | 1,2 | 1,2 | 1,2 |
| Platine 909 | 7,1 | 7,1 | 7,1 |
| Eau distillée | 224,0 | 224,0 | 224,0 |
| Tegopren® 5840 | 12,8 | 12,8 | 12,8 |

(suite)

| | Ex 4.1 | Ex 4.2 | Ex 4.3 |
|---|---|---|---|
| Densité (g/cm$^3$) | 0,20 | 0,67 | 0,86 |
| Ratio molaire H/Vi | 1,89 | 2,13 | 2,10 |

Ces résultats montrent qu'il est possible d'obtenir des matériaux silicones poreux avec différentes huiles SiH. La teneur massique en fonctions hydrogénosilyle Si-H a une influence sur la densité du matériau. Dans le cas où la teneur massique en fonctions hydrogénosilyle Si-H dans l'organohydrogénopolysiloxane est élevée (exemple 4.1), la densité du matériau obtenu est plus faible.

**Exemple 5 : Enduction d'un support**

L'émulsion étant très fluide, deux épaississants ont également été ajouté afin d'en augmenter la viscosité: le Rhodopol® (une gomme de type xanthane) et le Rheozan® (une gomme succinoglycane). La viscosité des émulsions passe de 0,1 Pa.s à environ 100 Pa.s. Les propriétés des matériaux poreux obtenus à partir de ces émulsions ont été déterminées. Les résultats sont présentés dans le tableau 8.

Tableau 8 : Exemples 5.1 à 5.3

| | Ex 5.1 (= Ex 2.3) | Ex 5.2 | Ex 5.3 |
|---|---|---|---|
| HVI1 | 100 | 100 | 100 |
| HVI2 | 18,2 | 18,2 | 18,2 |
| Huile SiH1 | 2,5 | 2,5 | 2,5 |
| Résine SiH | 1,2 | 1,2 | 1,2 |
| Platine 909 | 7,1 | 7,1 | 7,1 |
| Eau distillée | 224,0 | 224,0 | 224,0 |
| Tegopren® 5840 | 12,8 | 12,8 | 12,8 |
| Rheozan® | | 4,48 | |
| Rhodopol® | | | 4,48 |
| Densité (g/cm$^3$) | 0,20 | 0,22 | 0,21 |
| %Porosité ouverte/%Fermée | 65/15 | 54/33 | 72/7 |

Ces résultats montrent que l'ajout d'épaississants n'a pas d'effet sur la densité du matériau obtenu et la porosité du matériau demeure majoritairement ouverte.

Par ailleurs, les émulsions comprenant un épaississant (Ex. 5.2 et 5.3) ont été utilisées pour enduire un support en fibre de verre. Un support enduit d'une couche de matériau silicone poreux a été obtenu dans les deux cas. Ces résultats montrent qu'il est possible d'utiliser le procédé selon l'invention pour produire un support enduit d'un matériau silicone poreux.

**Exemple 6 : Propriétés mécaniques des matériaux silicones poreux**

Les propriétés mécaniques d'un matériau silicone poreux selon l'invention ont été déterminées. Les résultats sont présentés dans le tableau 9.

Tableau 9 : exemple 6.1

| | Ex 6.1 |
|---|---|
| HVI1 | 100 |
| HVI2 | 18,2 |
| Huile SiH1 | 2,5 |

(suite)

| | Ex 6.1 |
|---|---|
| Résine SiH | 1,2 |
| Platine 909 | 7,1 |
| Eau | 290,0 |
| Tegopren® 5840 | 25,6 |
| Densité (g/cm$^3$) | 0,20 |
| Porosité ouverte | 51% |
| Module E en compression (kPa) | 17,1 |
| Module E en traction (kPa) | 14,2 |
| Allongement à la rupture | 42% |

Ces résultats montrent que les matériaux silicones poreux selon l'invention ont de bonnes propriétés mécaniques.

## Revendications

**1.** Procédé pour produire un matériau silicone poreux comprenant les étapes suivantes :

1) mise en œuvre d'une émulsion directe **E** de silicone dans l'eau comprenant :

A) une base silicone **A** réticulable par polycondensation ou polyaddition ;
B) au moins un tensioactif siliconé non-ionique **B** ayant un point de trouble compris entre 10 et 50°C, de préférence entre 15 et 45°C, ledit tensioactif siliconé non-ionique **B** étant un copolymère organopolysiloxane-polyoxyalkylène;
C) éventuellement, au moins un catalyseur **C** ;
D) de l'eau ;

2) chauffage de l'émulsion **E** à une température supérieure ou égale à 60°C pour obtenir un matériau silicone poreux;
3) éventuellement, séchage du matériau silicone poreux, de préférence par chauffage.

**2.** Procédé selon la revendication 1, **caractérisé en ce que** le tensioactif siliconé non-ionique **B** comprend des motifs siloxyles ayant des séquences de chaines d'oxyde d'éthylène, et, éventuellement, des séquences de chaines d'oxyde de propylène.

**3.** Procédé selon la revendication 1 ou 2, **caractérisé en ce que** le tensioactif siliconé non-ionique **B** est choisi parmi les copolymères organopolysiloxane-polyoxyalkylène comprenant des motifs siloxyles de formule (B-1)

$$[R^1_aZ_bSiO_{(4-a-b)/2}]_n \qquad (B\text{-}1)$$

dans laquelle

- les radicaux $R^1$, identiques ou différents, représentent un radical hydrocarboné ayant de 1 à 30 atomes de carbone, de préférence choisi parmi les groupes alkyles ayant de 1 à 8 atomes de carbone et les groupes aryles ayant de 6 à 12 atomes de carbones
- n est un nombre entier supérieur ou égal à 2;
- a et b sont indépendamment 0, 1, 2 ou 3, et a+b = 0, 1, 2 ou 3;
- chaque radical Z est un groupe $-R^2-(OC_pH_{2p})_q(OC_rH_{2r})_s-OR^3$,

où

o $R^2$ est un groupe hydrocarboné divalent ayant de 2 à 20 atomes de carbone, ou une liaison;
o $R^3$ est H ou un groupe $R^1$ tel que défini ci-dessus,
o p et r sont, indépendamment, un entier entre 1 et 6;
o q et s sont, indépendamment, 0 ou un entier tel que $1<q + s< 400$;
et chaque molécule de copolymère organopolysiloxane-polyoxyalkylène **B** comprend au moins un groupe Z.

**4.** Procédé selon l'une des revendications précédentes, **caractérisé en ce que** l'émulsion **E** comprend entre 0,1 et 70% % en masse de tensioactif **B** par rapport à la masse totale de base silicone contenue dans l'émulsion, de préférence entre 0,5 et 50%, préférentiellement entre 1 et 25%, et encore plus préférentiellement entre 2 et 20%.

**5.** Procédé selon l'une des revendications précédentes, **caractérisé en ce que** l'émulsion **E** comprend entre 10 et 80% d'eau en masse par rapport à la masse totale de l'émulsion, de préférence entre 30 et 75%, et encore plus préférentiellement entre 35 et 65%.

**6.** Procédé selon l'une des revendications précédentes, **caractérisé en ce que** la base silicone **A** est réticulable par polyaddition et **en ce que** la base silicone **A** comprend :

o au moins un organopolysiloxane **A1** comprenant, par molécule, au moins 2 groupes alcényle ou alcynyle, linéaire ou ramifié, ayant de 2 à 6 atomes de carbone, et
o au moins un organohydrogénopolysiloxane **A2** comprenant, par molécule, au moins 2 fonctions hydrogénosilyle Si-H.

**7.** Procédé selon l'une des revendications 1 à 5, **caractérisé en ce que** la base silicone **A** est réticulable par polycondensation et **en ce que** la base silicone **A** comprend

o au moins un organopolysiloxane **A3** comprenant au moins deux groupements OH ou au moins deux groupements hydrolysables,
o éventuellement, au moins un agent réticulant **A4**.

**8.** Procédé selon l'une des revendications précédentes, **caractérisé en ce que** l'émulsion **E** comprend également au moins un épaississant **F**.

**9.** Procédé selon l'une des revendications précédentes, **caractérisé en ce que** l'étape 1) est une étape d'enduction d'un support avec une émulsion directe **E** de silicone dans l'eau.

**10.** Emulsion directe **E** de silicone dans l'eau comprenant

A) une base silicone **A** réticulable par polycondensation ou polyaddition ;
B) au moins un tensioactif siliconé non-ionique **B** ayant un point de trouble compris entre 10 et 50°C, de préférence entre 15 et 45°C, ledit tensioactif siliconé non-ionique **B** étant un copolymère organopolysiloxane-polyoxyalkylène;
C) éventuellement, au moins un catalyseur C ;
D) de l'eau.

**11.** Matériau silicone poreux comprenant au moins un tensioactif siliconé non-ionique **B** ayant un point de trouble compris entre 10 et 50°C, de préférence entre 15 et 45°C, ledit tensioactif siliconé non-ionique **B** étant un copolymère organopolysiloxane-polyoxyalkylène.

**12.** Matériau silicone poreux selon la revendication 11, obtenu par chauffage de l'émulsion **E** selon la revendication 10 à une température supérieure ou égale à 60°C.

**13.** Support enduit d'un matériau silicone poreux selon la revendication 11 ou 12.

## Patentansprüche

**1.** Verfahren zur Herstellung eines porösen Siliconmaterials, das die folgenden Schritte umfasst:

1) Verarbeitung einer Direktemulsion **E** von Silicon in Wasser, umfassend :

A) eine durch Polykondensation oder Polyaddition vernetzbare Siliconbasis A;
B) mindestens ein nichtionisches Silicontensid **B** mit einem Trübungspunkt zwischen 10 und 50°C, vorzugsweise zwischen 15 und 45°C , wobei das nichtionische Silicontensid **B** ein Organopolysiloxan-Polyoxyalkylen-Copolymer ist;
C) gegebenenfalls mindestens einen Katalysator **C** ;
D) Wasser;

2) Erhitzen der Emulsion **E** auf eine Temperatur von 60 °C oder höher, um ein poröses Siliconmaterial zu erhalten;
3) gegebenenfalls Trocknen des porösen Siliconmaterials, vorzugsweise durch Erhitzen.

**2.** Verfahren nach Anspruch 1, **dadurch gekennzeichnet, dass** das nichtionische Silicontensid **B** Siloxyl-Einheiten mit Sequenzen von Ethylenoxid-Ketten und gegebenenfalls Sequenzen von Propylenoxid-Ketten umfasst.

**3.** Verfahren nach Anspruch 1 oder 2, **dadurch gekennzeichnet, dass** das nichtionische Silicontensid **B** ausgewählt ist aus Organopolysiloxan-Polyoxyalkylen-Copolymeren, umfassend Siloxyl-Einheiten der Formel (B-1)

$$[R^1_a Z_b SiO_{(4-a-b)/2}]_n \qquad (B\text{-}1)$$

in der

- die Reste $R^1$, die gleich oder verschieden sind, einen Kohlenwasserstoffrest mit 1 bis 30 Kohlenstoffatomen darstellen, vorzugsweise ausgewählt aus den Alkylgruppen mit 1 bis 8 Kohlenstoffatomen und den Arylgruppen mit 6 bis 12 Kohlenstoffatomen
- n ist eine ganze Zahl größer oder gleich 2;
- a und b sind unabhängig voneinander 0, 1, 2 oder 3, und a+b = 0, 1, 2 oder 3;
- jeder Rest Z eine Gruppe $-R^2-(OC_pH_{2p})_q(OC_rH_{2r})_s-OR^3$ ist,

wobei

o $R^2$ eine zweiwertige Kohlenwasserstoffgruppe mit 2 bis 20 Kohlenstoffatomen oder eine Bindung ist;
o $R^3$ ist H oder eine Gruppe $R^1$ wie oben definiert,
o p und r unabhängig voneinander eine ganze Zahl zwischen 1 und 6 sind;
o q und s sind unabhängig voneinander 0 oder eine ganze Zahl, so dass $1<q + s< 400$;
und jedes Molekül des Organopolysiloxan-Polyoxyalkylen-Copolymers **B** mindestens eine Gruppe Z umfasst.

**4.** Verfahren nach einem der vorhergehenden Ansprüche, **dadurch gekennzeichnet, dass** die Emulsion **E** zwischen 0,1 und 70 Gew.-% Tensid **B,** bezogen auf die Gesamtmasse der in der Emulsion enthaltenen Siliconbasis, vorzugsweise zwischen 0,5 und 50 %, bevorzugt zwischen 1 und 25 % und noch bevorzugter zwischen 2 und 20 %, umfasst.

**5.** Verfahren nach einem der vorhergehenden Ansprüche, **dadurch gekennzeichnet, dass** die Emulsion **E** zwischen 10 und 80 Gew.-% Wasser, bezogen auf die Gesamtmasse der Emulsion, umfasst, vorzugsweise zwischen 30 und 75 % und noch bevorzugter zwischen 35 und 65 %.

**6.** Verfahren nach einem der vorhergehenden Ansprüche, **dadurch gekennzeichnet, dass** die Siliconbasis **A** durch Polyaddition vernetzbar ist und dass die Siliconbasis **A** umfasst:

o mindestens ein Organopolysiloxan **A1,** das pro Molekül mindestens zwei lineare oder verzweigte Alkenyl- oder Alkinylgruppen mit 2 bis 6 Kohlenstoffatomen umfasst, und
o mindestens ein Organohydrogenpolysiloxan **A2,** das pro Molekül mindestens 2 Hydrogensilylfunktionen Si-H umfasst.

**7.** Verfahren nach einem der Ansprüche 1 bis 5, **dadurch gekennzeichnet, dass** die Siliconbasis **A** durch Polykondensation vernetzbar ist und dass die Siliconbasis **A** Folgendes umfasst

o mindestens ein Organopolysiloxan **A3**, das mindestens zwei OH-Gruppen oder mindestens zwei hydrolysierbare Gruppen umfasst,
o gegebenenfalls mindestens ein Vernetzungsmittel **A4**.

**8.** Verfahren nach einem der vorhergehenden Ansprüche, **dadurch gekennzeichnet, dass** die Emulsion **E** auch mindestens ein Verdickungsmittel **F** umfasst.

**9.** Verfahren nach einem der vorhergehenden Ansprüche, **dadurch gekennzeichnet, dass** Schritt 1) ein Schritt ist, bei dem ein Träger mit einer Direktemulsion **E** von Silicon in Wasser beschichtet wird.

**10.** Direktemulsion **E** von Silicon in Wasser, umfassend

A) eine durch Polykondensation oder Polyaddition vernetzbare **A**-Siliconbasis ;
B) mindestens ein nichtionisches Silicontensid **B** mit einem Trübungspunkt zwischen 10 und 50°C, vorzugsweise zwischen 15 und 45°C, wobei das nichtionische Silicontensid **B** ein Organopolysiloxan-Polyoxyalkylen-Copolymer ist;
C) gegebenenfalls mindestens einen Katalysator C ;
D) Wasser.

**11.** Poröses Siliconmaterial, umfassend mindestens ein nichtionisches Silicontensid **B** mit einem Trübungspunkt zwischen 10 und 50°C, vorzugsweise zwischen 15 und 45°C, wobei das nichtionische Silicontensid **B** ein Organopolysiloxan-Polyoxyalkylen-Copolymer ist.

**12.** Poröses Siliconmaterial nach Anspruch 11, erhalten durch Erhitzen der Emulsion **E** nach Anspruch 10 auf eine Temperatur von 60 °C oder höher.

**13.** Mit einem porösen Siliconmaterial beschichtetes Trägermaterial nach Anspruch 11 oder 12.

## Claims

**1.** A method for producing a porous silicone material, comprising the following steps:

1) implementing a direct emulsion **E** of silicone in water comprising:

A) a silicone base **A** crosslinkable by polycondensation or polyaddition;
B) at least one nonionic silicone surfactant **B** having a cloud point comprised between 10 and 50°C, preferably between 15 and 45°C, said nonionic silicone surfactant **B** being an organopolysiloxane-polyoxyalkylene copolymer;
C) optionally, at least one catalyst **C**; and
D) water;

2) heating the emulsion **E** to a temperature greater than or equal to 60°C to obtain a porous silicone material; and
3) optionally, drying the porous silicone material, preferably by heating.

**2.** Method according to claim 1, wherein the nonionic silicone surfactant **B** comprises siloxyl units having sequences of ethylene oxide chains, and, optionally, sequences of propylene oxide chains.

**3.** Method according to claim 1 or 2, wherein the nonionic silicone surfactant **B** is selected from the organopolysiloxane-polyoxyalkylene copolymers comprising siloxyl units of formula (B-1)

$$[R^1aZ_bSiO_{(4-a-b)/2}]_n \qquad \text{(B-1)}$$

in which

- the $R^1$ radicals, which are identical or different, represent a hydrocarbon radical having from 1 to 30 carbon atoms, preferably selected from the alkyl groups having from 1 to 8 carbon atoms and the aryl groups having from 6 to 12 carbon atoms
- n is an integer greater than or equal to 2;

- a and b are independently 0, 1, 2, or 3, and a + b = 0, 1, 2, or 3;
- each Z radical is a $-R^2-(OC_pH_{2p})_q(OC_rH_{2r})_s-OR^3$ group,

where

o $R^2$ is a divalent hydrocarbon group having from 2 to 20 carbon atoms, or a bond;
o $R^3$ is H or an $R^1$ group as defined above,
o p and r are, independently, an integer between 1 and 6;
o q and s are, independently, 0 or an integer such that $1 < q + s < 400$;
and each molecule of organopolysiloxane-polyoxyalkylene copolymer B comprises at least one Z group.

**4.** Method according to one of the preceding claims, wherein the emulsion E comprises between 0.1 and 70% by mass of surfactant B relative to the total mass of silicone base contained in the emulsion, preferably between 0.5 and 50%, more preferably between 1 and 25%, and even more preferably between 2 and 20%.

**5.** Method according to one of the preceding claims, wherein the emulsion **E** comprises between 10 and 80% of water by mass relative to the total mass of the emulsion, preferably between 30 and 75%, and even more preferably between 35 and 65%.

**6.** Method according to one of the preceding claims, wherein the silicone base **A** is crosslinkable by polyaddition and wherein the silicone base **A** comprises:

o at least one organopolysiloxane **A1** comprising, per molecule, at least 2 alkenyl or alkynyl groups, linear or branched, having from 2 to 6 carbon atoms, and
o at least one organohydrogenpolysiloxane **A2** comprising, per molecule, at least 2 silyl hydride functions Si-H.

**7.** Method according to one of claims 1 to 5, wherein the silicone base **A** is crosslinkable by polycondensation and wherein the silicone base **A** comprises

o at least one organopolysiloxane **A3** comprising at least two OH functional groups or at least two hydrolyzable functional groups, and
◦ optionally, at least one crosslinking agent **A4.**

**8.** Method according to one of the preceding claims, wherein the emulsion **E** also comprises at least one thickener **F.**

**9.** Method according to one of the preceding claims, wherein step 1) is a step of coating a support with a direct emulsion **E** of silicone in water.

**10.** Direct emulsion **E** of silicone in water, comprising

A) a silicone base **A** crosslinkable by polycondensation or polyaddition;
B) at least one nonionic silicone surfactant **B** having a cloud point comprised between 10 and 50°C, preferably between 15 and 45°C, said nonionic silicone surfactant **B** being an organopolysiloxane-polyoxyalkylene copolymer;
C) optionally, at least one catalyst **C**; and
D) water.

**11.** Porous silicone material comprising at least one nonionic silicone surfactant **B** having a cloud point comprised between 10 and 50°C, preferably between 15 and 45°C, said nonionic silicone surfactant **B** being an organopolysiloxane-polyoxyalkylene copolymer.

**12.** Porous silicone material according to claim 11, obtained by heating the emulsion **E** according to claim 10 to a temperature greater than or equal to 60°C.

**13.** Support coated with a porous silicone material according to claim 11 or 12.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1724308 A
- WO 03104312 A
- US 20050113461 A
- US 20180037709 A
- WO 9409058 A
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- EP 2268743 A
- EP 2367867 A
- EP 2222626 A
- EP 2222756 A
- EP 2222773 A
- EP 2935489 A
- EP 2935490 A
- WO 2015082837 A